# EUROPEAN PATENT APPLICATION

(11) **EP 4 325 927 A1**
(43) Date of publication of application: **21.02.2024**
(21) Application number: 21936362.9
(22) Date of filing: 13.04.2021
(51) Int. Cl.: H04W 24/08, H04W 24/10, H04W 36/32

(54) **METHOD AND APPARATUS FOR DETERMINING SERVING CELL**

(71) Applicant: Beijing Xiaomi Mobile Software Co., Ltd., Beijing 100085 (CN)
(72) Inventor: JIANG, Xiaowei, Beijing 100085 (CN)
(74) Representative: dompatent von Kreisler Selting Werner - Partnerschaft von Patent- und Rechtsanwälten mbB
(86) International application number: PCT/CN2021/087048
(87) International publication number: WO 2022/217469

(57) **Abstract**

The present disclosure relates to the field of communications. Provided is a method for determining a serving cell. The technical solution of the present application mainly includes: for a user equipment (UE) that takes a non-terrestrial network (NTN) cell as the current serving cell, if an acquisition condition of position information of the UE does not comply with a preset condition, determining a new serving cell for the UE. By means of the embodiments of the present application, for a UE, an acquisition condition of position information of which does not comply with a preset condition, a new serving cell is determined therefor, such that the problem of it being impossible to perform normal communication because uplink synchronization cannot be performed due to the UE still residing in the current serving cell and the acquisition condition of the position information of the UE not complying with the preset condition can be avoided.

## Description

### TECHNICAL FIELD

The present disclosure relates to the technical field of mobile communication, and more particularly to a method and apparatus for determining a serving cell.

### BACKGROUND

A non-terrestrial network (NTN) is introduced into a mobile communication system as an important technology, which provides a wireless resource via a satellite or an unmanned aerial vehicle instead of a ground base station. When a user equipment (UE) accesses the mobile communication system via the NTN, the UE needs to perform a timing advance (TA) pre-compensation based on obtained location information to implement uplink synchronization. However, the UE is not always able to obtain the location information. As a result, the UE cannot implement the uplink synchronization, and thus cannot perform communication normally.

### SUMMARY

Embodiments of a first aspect of the present disclosure provided a method for determining a serving cell, which is performed by a user equipment (UE). A current serving cell of the UE is a non-terrestrial network (NTN) cell. The method includes: when an acquisition situation of location information of the UE does not meet a preset condition, determining a new serving cell.

Optionally, when the acquisition situation of the location information of the UE does not meet the preset condition, determining the new serving cell includes: when the acquisition situation does not meet the preset condition, and a duration for which the acquisition situation does not meet the preset condition reaches a preset duration, determining the new serving cell.

Optionally, the preset condition includes any one of: the location information not being obtained by the UE; or the location information being obtained by the UE, but at least one of a confidence and an uncertainty of the location information not meeting a preset threshold value requirement.

Optionally, determining the new serving cell includes: determining the new serving cell via a cell selection. The UE is in a non-connected state.

Optionally, determining the new serving cell via the cell selection includes: based on a preset frequency priority configuration, determining the new serving cell in an order from a high frequency priority to a low frequency priority. The preset frequency priority configuration is configured to indicate that a priority of a frequency used by an NTN cell is lower than a priority of a frequency used by a terrestrial network (TN) cell. The frequency used by the NTN cell is different from the frequency used by the TN cell.

Optionally, determining the new serving cell via the cell selection includes: based on a preset cell priority configuration, determining the new serving cell in an order from a high cell priority to a low cell priority. The preset cell priority configuration is configured to indicate that a priority of an NTN cell is lower than a priority of a TN cell. The NTN cell and the TN cell use a same frequency.

Optionally, the method further includes: based on a preset measurement standard, performing a cell measurement.

Optionally, the preset measurement standard includes at least one of:
when a signal quality of the current serving cell is greater than a preset co-frequency measurement threshold, and the acquisition situation meets the preset condition, the cell measurement not being performed for a co-frequency cell, otherwise, the cell measurement being performed for the co-frequency cell, in which the co-frequency cell and the current serving cell use a same frequency;
when the signal quality of the current serving cell is greater than a preset inter-frequency measurement threshold, and the acquisition situation meets the preset condition, the cell measurement not being performed for a first type of cell, otherwise, the cell measurement being performed for the first type of cell, in which a priority of a frequency used by the first type of cell is equal to or lower than a priority of a frequency used by the current serving cell; or
when the signal quality of the current serving cell is greater than the preset inter-frequency measurement threshold, the UE is configured with a high-priority measurement relaxation, and the acquisition situation meets the preset condition, the cell measurement not being performed for a second type of cell, otherwise, the cell measurement being performed for the second type of cell, in which a priority of a frequency used by the second type of cell is higher than the priority of the frequency used by the current serving cell.

Optionally, the method further includes: recording information that the acquisition situation does not meet the preset condition via a minimization drive test (MDT) record.

Optionally, determining the new serving cell includes: handing over a serving cell of the UE from the NTN cell to the new serving cell according to preconfigured handover information. The preconfigured handover information is configured to indicate a TN cell that is capable of being used as the new serving cell when the acquisition situation does not meet the preset condition. The UE is in a connected state.

Optionally, the method further includes: sending a first message to a network device. The first message is configured to indicate the network device to hand over a serving cell of the UE from the NTN cell to a TN cell. The UE is in a connected state.

Optionally, sending the first message to the network device includes: sending the first message to the network device via a media access control control element (MAC CE) signaling; or based on a preconfigured trigger condition, sending the first message to the network device via a radio resource control (RRC) signaling. The preconfigured trigger condition includes the acquisition situation not meeting the preset condition.

Optionally, determining the new serving cell includes: determining a TN cell as the new serving cell via a connection reestablishment process. The UE is in a connected state.

Embodiments of a second aspect of the present disclosure provided a method for determining a serving cell, which is performed by a network device and includes: determining a new serving cell for a UE based on a message sent by the UE. A current serving cell of the UE is a non-terrestrial network (NTN) cell, and the message is sent by the UE when an acquisition situation of location information does not meet a preset condition.

Optionally, the message is sent by the UE when the acquisition situation does not meet the preset condition, and a duration for which the acquisition situation does not meet the preset condition reaches a preset duration.

Optionally, the preset condition includes any one of: the location information not being obtained by the UE; or the location information being obtained by the UE, but at least one of a confidence and an uncertainty of the location information not meeting a preset threshold value requirement.

Optionally, the method further includes: handing over a serving cell of the UE from the NTN cell to a TN cell.

Optionally, determining the new serving cell for the UE further includes: sending a measurement indication message to the UE; receiving a measurement report reported by the UE after performing a cell measurement based on the measurement indication message; and determining a TN cell as the new serving cell according to the measurement report.

Embodiments of a third aspect of the present disclosure provided an apparatus for determining a serving cell. A current serving cell of the apparatus is a non-terrestrial network (NTN) cell. The apparatus includes: a processing module configured to determine a new serving cell when an acquisition situation of location information does not meet a preset condition.

Optionally, the processing module is configured to: determine the new serving cell, when the acquisition situation does not meet the preset condition, and a duration for which the acquisition situation does not meet the preset condition reaches a preset duration.

Optionally, the preset condition includes any one of: the location information not being obtained by the UE; or the location information being obtained by the UE, but at least one of a confidence and an uncertainty of the location information not meeting a preset threshold value requirement.

Optionally, the processing module is configured to: determine the new serving cell via a cell selection. The UE is in a non-connected state.

Optionally, the processing module is configured to determine the new serving cell via the cell selection based on a following step: based on a preset frequency priority configuration, determining the new serving cell in an order from a high frequency priority to a low frequency priority. The preset frequency priority configuration is configured to indicate that a priority of a frequency used by an NTN cell is lower than a priority of a frequency used by a terrestrial network (TN) cell. The frequency used by the NTN cell is different from the frequency used by the TN cell.

Optionally, the processing module is configured to determine the new serving cell via the cell selection based on a following step: based on a preset cell priority configuration, determining the new serving cell in an order from a high cell priority to a low cell priority. The preset cell priority configuration is configured to indicate that a priority of an NTN cell is lower than a priority of a TN cell. The NTN cell and the TN cell are capable to use a same frequency.

Optionally, the processing module is further configured to: perform a cell measurement, based on a preset measurement standard.

Optionally, the preset measurement standard includes at least one of:
when a signal quality of the current serving cell is greater than a preset co-frequency measurement threshold, and the acquisition situation meets the preset condition, the cell measurement not being performed for a co-frequency cell, otherwise, the cell measurement being performed for the co-frequency cell, in which the co-frequency cell and the current serving cell use a same frequency;
when the signal quality of the current serving cell is greater than a preset inter-frequency measurement threshold, and the acquisition situation meets the preset condition, the cell measurement not being performed for a first type of cell, otherwise, the cell measurement being performed for the first type of cell, in which a priority of a frequency used by the first type of cell is equal to or lower than a priority of a frequency used by the current serving cell; or
when the signal quality of the current serving cell is greater than the preset inter-frequency measurement threshold, the UE is configured with a high-priority measurement relaxation, and the acquisition situation meets the preset condition, the cell measurement not being performed for a second type of cell, otherwise, the cell measurement being performed for the second type of cell, in which a priority of a frequency used by the second type of cell is higher than the priority of the frequency used by the current serving cell.

Optionally, the processing module is further configured to: record information that the acquisition situation does not meet the preset condition via a minimization drive test (MDT) record.

Optionally, the processing module is configured to: hand over a serving cell of the UE from the NTN cell to the new serving cell according to preconfigured handover information. The preconfigured handover information is configured to indicate a TN cell that is capable of being used as the new serving cell when the acquisition situation does not meet the preset condition. The UE is in a connected state.

Optionally, the apparatus further includes a transceiving module, which is configured to: send a first message to a network device. The first message is configured to indicate the network device to hand over a serving cell of the UE from the NTN cell to a TN cell. The UE is in a connected state.

Optionally, the transceiving module is configured to: send the first message to the network device via a media access control control element (MAC CE) signaling; or send the first message to the network device via a radio resource control (RRC) signaling based on a preconfigured trigger condition. The preconfigured trigger condition includes the acquisition situation not meeting the preset condition.

Optionally, the processing module is configured to: determine a TN cell as the new serving cell via a connection reestablishment process. The UE is in a connected state.

Embodiments of a fourth aspect of the present disclosure provided an apparatus for determining a serving cell, which includes: a processing module configured to determine a new serving cell for a UE based on a message sent by the UE. A current serving cell of the UE is a non-terrestrial network (NTN) cell, and the message is sent by the UE when an acquisition situation of location information does not meet a preset condition.

Optionally, the message is sent by the UE when the acquisition situation does not meet the preset condition, and a duration for which the acquisition situation does not meet the preset condition reaches a preset duration.

Optionally, the preset condition includes any one of: the location information not being obtained by the UE; or the location information being obtained by the UE, but at least one of a confidence and an uncertainty of the location information not meeting a preset threshold value requirement.

Optionally, the processing module is configured to: hand over a serving cell of the UE from the NTN cell to a TN cell.

Optionally, the apparatus further includes: a transceiving module, which is configured to send a measurement indication message to the UE; and receive a measurement report reported by the UE after performing a cell measurement based on the measurement indication message. The processing module is further configured to determine a TN cell as the new serving cell according to the measurement report.

Embodiments of a fifth aspect of the present disclosure provided a communication device, which includes: a transceiver; a memory; and a processor. The processor is connected to the transceiver and the memory respectively, and configured to control a transmission and a reception of a wireless signal of the transceiver and cause the method for determining the serving cell according to embodiments of the first aspect or the method for determining the serving cell according to embodiments of the second aspect to be implemented by executing computer-executable instructions on the memory.

Embodiments of a sixth aspect of the present disclosure provided a computer storage medium having stored therein computer-executable instructions that, when executed by a processor, cause the method for determining the serving cell according to embodiments of the first aspect or the method for determining the serving cell according to embodiments of the second aspect to be implemented.

Embodiments of the present disclosure provide the method and apparatus for determining the serving cell, with which the new serving cell is determined for the UE when the acquisition situation of the location information of the UE using the NTN cell as the current serving cell does not meet the preset condition. Through embodiments of the present disclosure, for a UE whose acquisition situation of the location information does not meet the preset condition, by determining the new serving cell for it, the following problem may be solved: a communication cannot be performed normally because the UE is unable to perform the uplink synchronization as the UE still resides in the current serving cell and the acquisition situation of the location information does not meet the preset condition.

Additional aspects and advantages of embodiments of the present disclosure will be given in part in the following descriptions, become apparent in part from the following descriptions, or be learned from the practice of the embodiments of the present disclosure.

### BRIEF DESCRIPTION OF THE DRAWINGS

The above and/or additional aspects and advantages of embodiments of the present disclosure will become apparent and more readily appreciated from the following descriptions made with reference to the drawings, in which:
FIG. 1 is a schematic architectural diagram of a communication system according to embodiments of the present disclosure.
FIG. 2 is a schematic flowchart of a method for determining a serving cell according to embodiments of the present disclosure;
FIG. 3 is a schematic flowchart of a method for determining a serving cell according to embodiments of the present disclosure;
FIG. 4 is a schematic flowchart of a method for determining a serving cell according to embodiments of the present disclosure;
FIG. 5 is a schematic flowchart of a method for determining a serving cell according to embodiments of the present disclosure;
FIG. 6 is a schematic flowchart of a method for determining a serving cell according to embodiments of the present disclosure;
FIG. 7 is a schematic flowchart of a method for determining a serving cell according to embodiments of the present disclosure;
FIG. 8 is a schematic flowchart of a method for determining a serving cell according to embodiments of the present disclosure;
FIG. 9 is a schematic flowchart of a method for determining a serving cell according to embodiments of the present disclosure;
FIG. 10 is a schematic flowchart of a method for determining a serving cell provided by embodiments of the present disclosure;
FIG. 11 is a schematic flowchart of a method for determining a serving cell provided by embodiments of the present disclosure;
FIG. 12 is a schematic flowchart of another method for determining a serving cell provided by embodiments of the present disclosure;
FIG. 13 is a schematic flowchart of another method for determining a serving cell provided by embodiments of the present disclosure;
FIG. 14 is a schematic flowchart of another method for determining a serving cell provided by embodiments of the present disclosure;
FIG. 15 is a schematic block diagram of an apparatus for determining a serving cell provided by embodiments of the present disclosure;
FIG. 16 is a schematic block diagram of an apparatus for determining a serving cell provided by embodiments of the present disclosure;
FIG. 17 is a schematic block diagram of another apparatus for determining a serving cell provided by embodiments of the present disclosure;
FIG. 18 is a schematic block diagram of another apparatus for determining a serving cell provided by embodiments of the present disclosure;
FIG. 19 is a schematic block diagram of a communication device provided by embodiments of the present disclosure;
FIG. 20 is a schematic block diagram of a chip provided by embodiments of the present disclosure.

### DETAILED DESCRIPTION

Embodiments of the present disclosure will be described in detail below, and examples of embodiments are illustrated in the drawings. The same or similar elements or the elements having the same or similar functions are denoted by like reference numerals throughout the descriptions. Embodiments described herein with reference to drawings are explanatory, serve to explain the present disclosure, and cannot be construed to limit embodiments of the present disclosure.

In order to better understand a method for determining a serving cell described in embodiments of the present disclosure, a communication system to which embodiments of the present disclosure are applicable is firstly described below.

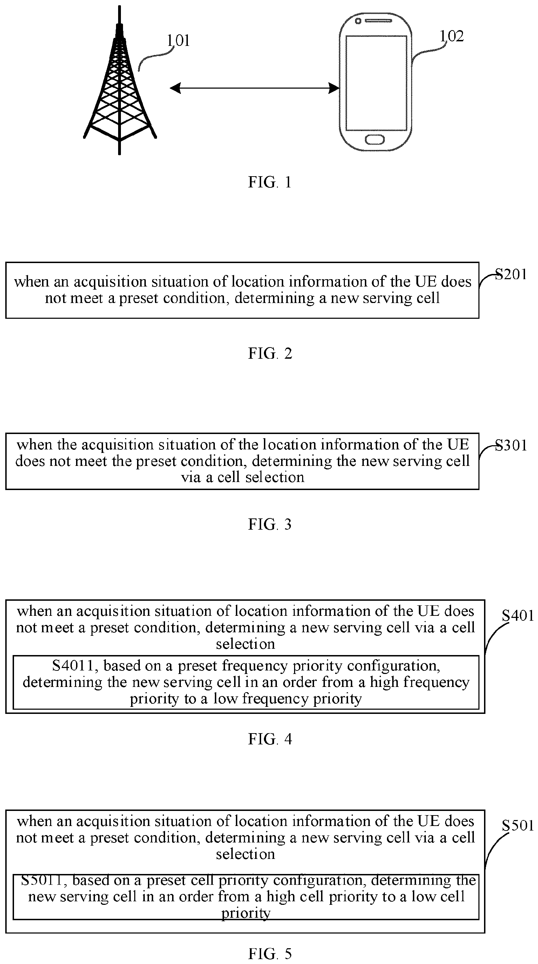

FIG. 1 is a schematic architecture diagram of a communication system provided by embodiments of the present disclosure. Referring to FIG. 1, the communication system may include, but not limited to, a network device and a terminal device. The number and forms of the devices shown in FIG. 1 are only as an example and do not constitute a limitation on embodiments of the present disclosure. The communication system may include two or more network devices, and two or more user equipment, in practical applications. As an example for illustration, the communication system shown in FIG. 1 includes a network device 101 and a user equipment 102.

It should be noted that the technical solutions of embodiments of the present disclosure may be applied to various communication systems, for example, a long term evolution (LTE) system, a 5th generation (5G) mobile communication system, a 5G new radio (NR) system, or other future new mobile communication systems.

The network device 101 in embodiments of the present disclosure is an entity on a network side for sending or receiving signals. For example, the network device 101 may be an evolved NodeB (eNB), a transmission reception point (TRP), a next generation NodeB (gNB) in a NR system, a base station in other future mobile communication systems, an access node in a wireless fidelity (WiFi) system, or the like. Embodiments of the present disclosure do not limit the specific technology and specific device form adopted by the network device. The network device provided by embodiments of the present disclosure may be composed of a central unit (CU) and distributed units (DU). The CU may also be called a control unit. Using the CU-DU structure allows to split a protocol layer of the network device, such as the base station, a part of functions of the protocol layer is centrally controlled in the CU, some or all of the remaining functions of the protocol layer are distributed in the DUs, and the CU centrally controls the DUs.

The user equipment 102 in embodiments of the present disclosure is an entity on a user side for receiving or sending signals, such as a mobile phone. The user equipment (UE) may also be called a terminal, a mobile station (MS), a mobile terminal (MT), and so on. The user equipment may be a car, a smart car, a mobile phone, a wearable device, a tablet Pad, a computer with a wireless transceiving function, a virtual reality (VR) terminal device, an augmented reality (AR) terminal device, a wireless terminal device in an industrial control, a wireless terminal device in a self-driving, a wireless terminal device in a remote medical surgery, a wireless terminal device in a smart grid, a wireless terminal device in a transportation safety, a wireless terminal device in a smart city, a wireless terminal device in a smart home, etc., each of which has a communication function. Embodiments of the present disclosure do not limit the specific technology and the specific device form adopted by the user equipment.

It can be understood that the communication system described in embodiments of the present disclosure is intended to illustrate the technical solutions of embodiments of the present disclosure more clearly, and does not constitute a limitation on the technical solutions provided by embodiments of the present disclosure. Those of ordinary skill in the art will know that with an evolution of a system architecture and an emergence of a new service scenario, the technical solutions provided by embodiments of the present disclosure are also applicable to similar technical problems.

A non-terrestrial network (NTN) is introduced into a mobile communication system as an important technology, which provides a wireless resource via a satellite or an unmanned aerial vehicle instead of a ground base station. When the user equipment (UE) accesses the mobile communication system via the NTN, the UE needs to perform a timing advance (TA) pre-compensation based on obtained location information to implement uplink synchronization.

Currently, an assumption for using the NTN to access the mobile communication system is that the UE can obtain location information. However, in practice, the UE is not always able to obtain the location information. For example, when inside a building, the UE cannot obtain the location information. When the UE does not have the location information, the UE cannot perform a TA pre-compensation. As a result, the UE cannot perform the uplink synchronization, and thus cannot perform communication normally.

In order to solve the above problems in the related art, the present disclosure provides a method and apparatus for determining a serving cell, with which a new serving cell is determined for the UE when an acquisition situation of location information of the UE using an NTN cell as a current serving cell does not meet a preset condition. Through embodiments of the present disclosure, for a UE whose acquisition situation of the location information does not meet the preset condition, by determining the new serving cell for it, the following problem may be solved: the communication cannot be performed normally because the UE is unable to perform the uplink synchronization as the UE still resides in the current serving cell and the acquisition situation of the location information does not meet the preset condition.

A method and apparatus for determining a serving cell provided by the present disclosure will be described in detail below with reference to the accompanying drawings.

FIG. 2 shows a schematic flowchart of a method for determining a serving cell according to embodiments of the present disclosure. As shown in FIG. 2, the method may be performed by a UE, and a current serving cell of the UE is an NTN cell. The method may include, but is not limited to, a following step.

In step S201, when an acquisition situation of location information of the UE does not meet a preset condition, a new serving cell is determined.

In embodiments of the present disclosure, when the acquisition situation of the location information of the UE using the NTN cell as the current serving cell does not meet the preset condition, the new serving cell may be determined for the UE.

In embodiments of the present disclosure, the location information of the UE may only refer to a certain type of location information, for example, global navigation satellite system (GNSS) location information, or may refer to location information obtained by various other positioning methods, for example, location information obtained by a long term evolution (LET)/new radio (NR) positioning, a Wi-Fi/Bluetooth positioning, or others.

In some embodiments, the above step S201 may be implemented as: when the acquisition situation of the location information of the UE does not meet the preset condition and a duration for which the acquisition situation does not meet the preset condition reaches a preset duration, the new serving cell is determined.

In practical applications, the acquisition situation of the location information of the UE may not meet the preset condition at a certain point in time or only in a very short period of time due to emergencies, and the acquisition situation of the location information of the UE may recover to meet the preset condition in a short time. In this case, determining the new serving cell for the UE does not have obvious advantages or even causes additional overhead compared to allowing the UE to still reside in the current serving cell. That is, in this case, there is no need to determine the new serving cell for the UE.

Therefore, in practical applications, when the duration for which the acquisition situation of the location information of the UE does not meet the preset condition reaches the preset duration, the new serving cell may be determined for the UE. The preset duration may be determined based on experience. For example, if it is known from historical data that when the duration for which the acquisition situation of the location information of the UE does not meet the preset condition reaches several seconds, unacceptable communication problems will occur, then the preset duration may be set to the several seconds.

In some embodiments, the above preset condition may include any one of: the location information not being obtained by the UE; or the location information being obtained by the UE, but at least one of a confidence and an uncertainty of the location information not meeting a preset threshold value requirement.

Specifically, the acquisition situation of the location information of the UE not meeting the preset condition may be that the UE cannot obtain the location information, or may be that a duration for which the UE cannot obtain the location information reaches the preset duration. For example, the UE cannot obtaining the location information may be that the UE cannot obtain the location information by a specific positioning method, or that the UE cannot obtain the location information by any positioning methods.

In addition, the acquisition situation of the location information of the UE not meeting the preset condition may also be that the UE can obtain the location information, but the confidence and/or the uncertainty of the obtained location information does not meet the preset threshold value requirement, or may also be that the UE can obtain the location information, but a duration for which the confidence and/or the uncertainty of the obtained location information does not meet the preset value requirement reaches a preset duration. The confidence of the location information represents a credibility of the location information, and the uncertainty of the location information represents an available accuracy of the location information. In some embodiments, the above preset threshold value requirement may include a threshold value for the confidence and/or the uncertainty. For example, when the threshold value for the confidence is 30%, and the threshold value for the uncertainty is 100 meters, the acquisition situation of the location information of the UE not meeting the preset condition may be that the confidence of the location information obtained by the UE is lower than 30%, and/or the uncertainty of the position information is greater than 100 meters. For another example, the acquisition situation of the location information of the UE not meeting the preset condition may also be that a duration for which the confidence of the location information obtained by the UE is lower than 30% reaches a certain duration, and/or that a duration for which the uncertainty of the location information is greater than 100 meters reaches a certain duration. In some embodiments, in addition to the threshold value for the confidence and/or the uncertainty, the above preset threshold value requirement may also include a tolerance limit. For example, when a tolerance limit for the confidence and the uncertainty is 5%, the acquisition situation of the location information of the UE not meeting the preset condition may be that the confidence of the location information obtained by the UE is lower than (30% - 5 %), and/or the uncertainty of the position information obtained by the UE is greater than (100 meters + 100*5% meters). The tolerance limit for the uncertainty may also be expressed as a specific numerical value, such as 10, then the acquisition situation of the location information of the UE not meeting the preset condition may be that the uncertainty of the location information obtained by the UE is greater than (100 meters + 10 meters), etc.

In some embodiments, the above preset threshold value requirement may be notified to the UE by a network device using a dedicated message via a broadcast message or an RRC signaling.

By implementing embodiments of the present disclosure, for a UE whose acquisition situation of the location information does not meet the preset condition, by determining the new serving cell for the UE, the following problem may be solved: the communication cannot be performed normally because the UE is unable to perform the uplink synchronization as the UE still resides in the current serving cell and the acquisition situation of the location information does not meet the preset condition.

FIG. 3 shows a schematic flowchart of a method for determining a serving cell according to embodiments of the present disclosure. As shown in FIG. 3, the method may be performed by a UE, a current serving cell of the UE is an NTN cell, and the UE is currently in a non-connected state. The method provides a manner for determining a new serving cell for the UE when an acquisition situation of location information of the UE does not meet a preset condition, and the method may include, but is not limited to, a following step.

In step S301, when the acquisition situation of the location information of the UE does not meet the preset condition, the new serving cell is determined via a cell selection.

In embodiments of the present disclosure, the UE being in the non-connected state may refer to that the UE is in an idle state or the UE is in an inactive state. For example, the UE is not currently connected to a network device.

The location information of the UE may only refer to a certain type of location information, for example, GNSS location information, or may refer to location information obtained by various other positioning methods, for example, the location information obtained by an LET/NR positioning, a Wi-Fi/Bluetooth positioning, or others.

In some embodiments, the acquisition situation of the location information of the UE not meeting the preset condition may include that the acquisition situation of the location information of the UE does not meet the preset condition, and a duration for which the acquisition situation of the location information does not meet the preset condition reaches a preset duration.

In practical applications, the acquisition situation of the location information of the UE may not meet the preset condition at a certain point in time or only in a very short period of time due to emergencies, and the acquisition situation of the location information of the UE may recover to meet the preset condition in a short time. In this case, determining the new serving cell for the UE does not have obvious advantages or even causes additional overhead compared to allowing the UE to still reside in the current serving cell. That is, in this case, there is no need to determine the new serving cell for the UE.

Therefore, in practical applications, when the duration for which the acquisition situation of the location information of the UE does not meet the preset condition reaches the preset duration, the new serving cell may be determined for the UE. The preset duration may be determined based on experience. For example, if it is known from historical data that when the duration for which the acquisition situation of the location information of the UE does not meet the preset condition reaches several seconds, unacceptable communication problems will occur, then the preset duration may be set to the several seconds.

In some embodiments, the above preset condition may include any one of: the location information not being obtained by the UE; or the location information being obtained by the UE, but at least one of a confidence and an uncertainty of the location information not meeting a preset threshold value requirement.

Specifically, the acquisition situation of the location information of the UE not meeting the preset condition may be that the UE cannot obtain the location information, or may be that a duration for which the UE cannot obtain the location information reaches the preset duration. For example, the UE cannot obtaining the location information may be that the UE cannot obtain the location information by a specific positioning method, or that the UE cannot obtain the location information by any positioning methods.

In addition, the acquisition situation of the location information of the UE not meeting the preset condition may also be that the UE can obtain the location information, but the confidence and/or the uncertainty of the obtained location information does not meet the preset threshold value requirement, or may also be that the UE can obtain the location information, but a duration for which the confidence and/or the uncertainty of the obtained location information does not meet the preset value requirement reaches a preset duration. The confidence of the location information represents a credibility of the location information, and the uncertainty of the location information represents an available accuracy of the location information. In some embodiments, the above preset threshold value requirement may include a threshold value for the confidence and/or the uncertainty. For example, when the threshold value for the confidence is 30%, and the threshold value for the uncertainty is 100 meters, the acquisition situation of the location information of the UE not meeting the preset condition may be that the confidence of the location information obtained by the UE is lower than 30%, and/or the uncertainty of the position information is greater than 100 meters. For another example, the acquisition situation of the location information of the UE not meeting the preset condition may also be that a duration for which the confidence of the location information obtained by the UE is lower than 30% reaches a certain duration, and/or that a duration for which the uncertainty of the location information is greater than 100 meters reaches a certain duration. In some embodiments, in addition to the threshold value for the confidence and/or the uncertainty, the above preset threshold value requirement may also include a tolerance limit. For example, when a tolerance limit for the confidence and the uncertainty is 5%, the acquisition situation of the location information of the UE not meeting the preset condition may be that the confidence of the location information obtained by the UE is lower than (30% - 5 %), and/or the uncertainty of the position information obtained by the UE is greater than (100 meters + 100*5% meters). The tolerance limit for the uncertainty may also be expressed as a specific numerical value, such as 10, then the acquisition situation of the location information of the UE not meeting the preset condition may be that the uncertainty of the location information obtained by the UE is greater than (100 meters + 10 meters), etc.

In some embodiments, the above preset threshold value requirement may be notified to the UE by the network device using a dedicated message via a broadcast message or an RRC signaling.

In embodiments of the present disclosure, when the current serving cell of the UE is an NTN serving cell, if the UE is currently in the non-connected state, and the acquisition situation of the location information of the UE does not meet the preset condition, the UE may perform the cell selection (for example, cell selection/reselection) to determine the new serving cell for the UE. In some embodiments, in order to avoid a communication problem caused by the occurrence of the acquisition situation of the location information not meeting the preset condition again due to re-determining an NTN serving cell for the UE, during the cell selection, the UE first determines a terrestrial network (TN) cell as the new serving cell, and an NTN cell will be determined as the new serving cell only when no TN cell can be determined as the new serving cell. Specifically, when performing the cell selection, the UE may perform the cell selection based on a preset priority configuration, which enables the UE to preferentially determine a TN cell as the new serving cell. That is, the preset priority configuration enables the UE to make selection from TN cells first, and then make selection from NTN cells when no TN cell can be determined as the new serving cell.

By implementing embodiments of the present disclosure, for a UE whose acquisition situation of the location information does not meet the preset condition, if the UE is in the non-connected state, by determining the new serving cell for the UE through cell selection according to the priority configuration where a priority of the NTN cell is lower than a priority of the TN cell, the following problem may be solved: the communication cannot be performed normally because the UE is unable to perform the uplink synchronization as the UE still resides in the current serving cell and the acquisition situation of the location information does not meet the preset condition.

FIG. 4 shows a schematic flowchart of a method for determining a serving cell according to embodiments of the present disclosure. Based on embodiments shown in FIG. 3, as shown in FIG. 4, the method may be performed by a UE, a current serving cell of the UE is an NTN cell, and the UE is currently in a non-connected state. The method may include, but is not limited to, a following step.

In step S401, when an acquisition situation of location information of the UE does not meet a preset condition, a new serving cell is determined via a cell selection.

For detailed descriptions of the above step S401, reference may be made to the relevant description of the step S301, which will not be repeated here.

In a mobile communication network, there may exist a situation where an NTN and a TN have a same frequency, and a situation where the NTN and the TN do not have the same frequency.

When the NTN and the TN do not have the same frequency, that is, the NTN and the TN use different frequency bands, so an NTN cell and a TN cell use different frequencies, the above step S401 may be implemented by a following step.

In step S4011, based on a preset frequency priority configuration, the new serving cell is determined in an order from a high frequency priority to a low frequency priority. The preset frequency priority configuration is configured to indicate that a priority of a frequency used by the NTN cell is lower than a priority of a frequency used by the TN cell.

In embodiments of the present disclosure, the situation where the NTN and the TN do not have the same frequency indicates that a frequency band used by the NTN is different from a frequency band used by the TN. For example, the NTN may use a frequency band of [frequency 1, frequency 2], while the TN may use a frequency band of [frequency 3, frequency 4], and the frequency band of [frequency 1, frequency 2] does not overlap with the frequency band of [frequency 3, frequency 4]. In order to preferentially determine a TN cell as the new serving cell of the UE, a cell selection/reselection may be performed in an order from the high frequency priority to the low frequency priority according to a frequency priority configuration where a priority of a frequency used by the NTN is lower than a priority of a frequency used by the TN. That is, when performing the cell selection/reselection, a cell that is capable of being used as the new serving cell is first determined from cells with the high frequency priority. If none of the cells with the high frequency priority is capable of being used as the new serving cell, a cell that is capable of being used as the new serving cell is selected from cells with the low frequency priority. Since the priority of the frequency used by the NTN is lower than the priority of the frequency used by the TN, so a frequency priority of the TN cell is higher than a frequency priority of the NTN cell. Therefore, when performing the cell selection/reselection, the TN cell may be preferentially determined as the new serving cell, and only when no TN cell is found to be used as the new serving cell, a cell that is capable of being used as the new serving cell is selected from NTN cells.

For example, the frequency band used by the NTN is set to have a lowest priority, and when performing a selection/reselection, the UE first searches for a cell that is capable of being used as the new serving cell from NR or other radio access technology (RAT) cells (that is, TN cells) corresponding to the frequency band used by the TN. If such a cell is found, the UE selects or reselects the cell to reside in. The selected or reselected cell may be a suitable cell or an acceptable cell. If such a cell is not found, the UE searches for a cell that is capable of being used as the new serving cell from cells corresponding to the frequency band used by the NTN (that is, NTN cells). For example, the cells corresponding to the frequency band used by the NTN may be set as prohibited cells or acceptable cells. The prohibited cell does not allow the UE to reside, and the UE will choose to reside in the acceptable cell only when no suitable cell is found.

By implementing embodiments of the present disclosure, for a UE whose acquisition situation of the location information does not meet the preset condition, if the UE is in the non-connected state, by performing the cell selection in an order from the high frequency priority to the low frequency priority based on the preset frequency priority configuration, the TN cell may be preferentially determined as the new serving cell for the UE, thereby avoiding a communication problem caused by the occurrence of the acquisition situation of the location information not meeting the preset condition again due to re-determining an NTN serving cell for the UE.

FIG. 5 shows a schematic flowchart of a method for determining a serving cell according to embodiments of the present disclosure. Based on embodiments shown in FIG. 3, as shown in FIG. 5, the method may be performed by a UE, a current serving cell of the UE is an NTN cell, and the UE is currently in a non-connected state. The method may include, but is not limited to, a following step.

In step S501, when an acquisition situation of location information of the UE does not meet a preset condition, a new serving cell is determined via a cell selection.

For detailed descriptions of the above step S501, reference may be made to the relevant description of the step S301, which will not be repeated here.

In a mobile communication network, there may exist a situation where an NTN and a TN have a same frequency, and a situation where the NTN and the TN do not have the same frequency.

When the NTN and the TN have the same frequency, that is, the NTN and the TN may use same frequency band, so an NTN cell and a TN cell can use the same frequency, and the above step S501 may be implemented by a following step.

In step S5011, based on a preset cell priority configuration, the new serving cell is determined in an order from a high cell priority to a low cell priority. The preset cell priority configuration is configured to indicate that a priority of the NTN cell is lower than a priority of the TN cell.

In embodiments of the present disclosure, the situation where the NTN and the TN have the same frequency indicates that a frequency band used by the NTN is the same as or partially same as a frequency band used by the TN. For example, the NTN may use a frequency band of [frequency 1, frequency 2], while the TN may use a frequency band of [frequency 3, frequency 4], and the frequency band of [frequency 1, frequency 2] has an overlapping part with the frequency band of [frequency 3, frequency 4]. In order to preferentially determine a TN cell as the new serving cell of the UE, a cell selection/reselection may be performed in an order from the high cell priority to the low cell priority according to a cell priority configuration where the priority of the NTN cell is lower than the priority of the TN cell. That is, when performing the cell selection/reselection, a cell that is capable of being used as the new serving cell is first determined from cells with the high cell priority. If none of the cells with the high cell priority is capable of being used as the new serving cell, a cell that is capable of being used as the new serving cell is selected from cells with the low cell priority. Since the priority of the NTN cell is lower than the priority of the TN cell, when performing the cell selection/reselection, the TN cell may be preferentially determined as the new serving cell, and only when no TN cell is found to be used as the new serving cell, a cell that is capable of being used as the new serving cell is selected from NTN cells. For example, an NTN cell may be set as a prohibited cell or an acceptable cell. The prohibited cell does not allow the UE to reside, while the UE will choose to reside in the acceptable cell only when no suitable cell is found.

For example, assume that the current serving cell of the UE is NTN cell 0, and there are three TN cells and three NTN cells for selection therefrom, they are TN cell 1, TN cell 2, TN cell 3, NTN cell 1, NTN cell 2 and NTN cell 3. The TN cell 1 and the TN cell 2 have a first cell priority, the TN cell 3 has a second cell priority, the NTN cell 1 has a third cell priority, and the NTN cell 2 and the NTN cell 3 have a fourth cell priority. The first cell priority is greater than the second cell priority, the second cell priority is greater than the third cell priority, and the third cell priority is greater than the fourth cell priority. When performing the cell selection/reselection, the UE first searches for the cell that is capable of being used as the new serving cell from the cells with the first cell priority. Since both the TN cell 1 and the TN cell 2 have the first cell priority, the UE makes selection from the TN cell 1 and the TN cell 2. If the TN cell 1 is capable of being used as the new serving cell, the UE selects the TN cell 1 to reside in. If neither the TN cell 1 nor the TN cell 2 is suitable as the new serving cell, the UE searches for the cell that is capable of being used as the new serving cell from the cells with the second cell priority, since only the TN cell 3 has the second cell priority, if the TN cell 3 is capable of being used as the new serving cell, the UE selects the TN cell 3 to reside in. If the TN cell 3 is not suitable as the new serving cell, the UE searches for the cell that is capable of being used as the new serving cell from the cells with the third cell priority. Since the NTN cell 1 has the third cell priority, if the NTN cell 1 is capable of being used as the new serving cell, the UE selects the NTN cell 1 to reside in. If the NTN cell 1 is not suitable as the new serving cell, the UE searches for the cell that is capable of being used as the new serving cell from the cells with the fourth cell priority, since both the NTN cell 2 and the NTN cell 3 have the fourth cell priority, the UE makes selection from the NTN cell 2 and the NTN cell 3. Since the NTN cell 2 is set as a forbidden cell, that is, the NTN cell 2 does not allow the UE to reside in; while the NTN cell 3 is set as an acceptable cell, that is, the NTN cell 3 allows the UE to reside in, and the NTN cell 3 is capable of being used as the new serving cell if no other more suitable cell is found, so the UE selects the NTN cell 3 to reside in.

By implementing embodiments of the present disclosure, for a UE whose acquisition situation of the location information does not meet the preset condition, if the UE is in the non-connected state, by selecting the new reserving cell in an order from the high cell priority to the low cell priority based on the preset cell priority configuration, the TN cell may be preferentially determined as the new serving cell for the UE, thereby avoiding a communication problem caused by the occurrence of the acquisition situation of the location information not meeting the preset condition again due to re-determining an NTN serving cell for the UE.

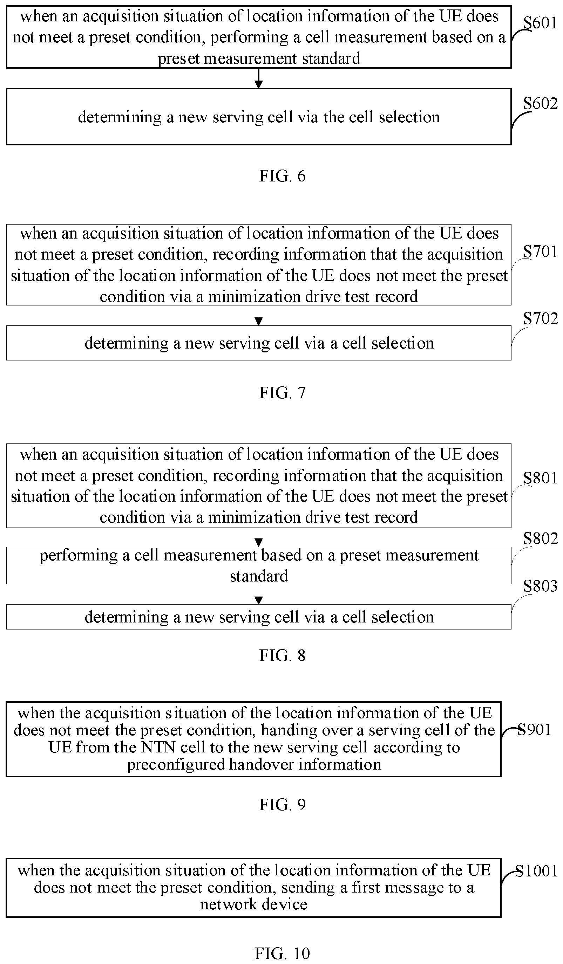

FIG. 6 shows a schematic flowchart of a method for determining a serving cell according to embodiments of the present disclosure. Based on embodiments shown in FIG. 3 to FIG. 5, as shown in FIG. 6, the method may be performed by a UE, a current serving cell of the UE is an NTN cell, and the UE is currently in a non-connected state. The method may include, but is not limited to, the following steps.

In step S601, when an acquisition situation of location information of the UE does not meet a preset condition, a cell measurement is performed based on a preset measurement standard.

In order to be able to select a most suitable cell, the cell measurement usually needs to be performed to determine relevant attributes of the serving cell and neighboring cells before performing a cell selection/reselection.

In embodiments of the present disclosure, the cell measurement is performed based on the preset measurement standard. The preset measurement standard may be preconfigured by a network device and notified to the UE.

In some embodiments, the preset measurement standard includes at least one of:
when a signal quality of the current serving cell of the UE is greater than a preset co-frequency measurement threshold, and the acquisition situation of the location information of the UE meets the preset condition, the cell measurement not being performed for a co-frequency cell, otherwise, the cell measurement being performed for the co-frequency cell, in which the co-frequency cell uses a same frequency as the current serving cell;
when the signal quality of the current serving cell of the UE is greater than a preset inter-frequency measurement threshold, and the acquisition situation of the location information of the UE meets the preset condition, the cell measurement not being performed for a first type of cell, otherwise, the cell measurement being performed for the first type of cell, in which a priority of a frequency used by the first type of cell is equal to or lower than a priority of a frequency used by the current serving cell; or
when the signal quality of the current serving cell of the UE is greater than the preset inter-frequency measurement threshold, the UE is configured with a high-priority measurement relaxation, and the acquisition situation of the location information of the UE meets the preset condition, the cell measurement not being performed for a second type of cell, otherwise, the cell measurement being performed for the second type of cell, in which a priority of a frequency used by the second type of cell is higher than the priority of the frequency used by the current serving cell.

In embodiments of the present disclosure, when determining whether to perform the cell measurement, in addition to considering configurations such as a measurement threshold, whether the acquisition situation of the location information of the UE meets the preset condition is also considered. When the measurement threshold requirement is met, and the acquisition situation of the location information of the UE meets the preset condition, the UE may not perform the corresponding measurement. If either of the above conditions is not met, for example, if the measurement threshold is not met, or if the acquisition situation of the location information of the UE does not meet the preset condition, the UE needs to perform the corresponding measurement.

Specifically, for example, for a case where the NTN and the TN use a same frequency point, if the signal quality of the current serving cell of the UE is greater than the co-frequency measurement threshold, such as an intra search threshold, and the acquisition situation of the location information of the UE meets the preset condition, the measurement may not be performed for other co-frequency cells that have a same frequency as the current serving cell. Otherwise, other co-frequency cells need to be measured. For another example, if the signal quality of the current serving cell of the UE is greater than the inter-frequency measurement threshold, such as a non-intra search threshold, and the acquisition situation of the location information of the UE meets the preset condition, the measurement may not be performed for cells who use a frequency having the same priority as or a lower priority than a frequency used by the current serving cell; otherwise, the cells need to be measured. For another example, if the signal quality of the current serving cell of the UE is greater than the inter-frequency measurement threshold, such as the non-intra search threshold, the UE is configured with the high-priority measurement relaxation, such as highPriorityMeasRelax, and the acquisition situation of the location information of the UE meets the preset condition, the measurement may not be performed for cells who use a frequency having a higher priority than the frequency used by the current serving cell; otherwise, the cells need to be measured.

In step S602, a new serving cell is determined via the cell selection.

For details and specific implementations of the step S602, reference may be made to the relevant descriptions of the steps S301, S401, and S501, which will not be repeated here.

By implementing embodiments of the present disclosure, for a UE whose acquisition situation of the location information does not meet the preset condition, if the UE is in the non-connected state, the new serving cell may be determined by performing the cell measurement and performing the cell selection, so the following problem may be solved: the communication cannot be performed normally because the UE is unable to perform the uplink synchronization as the UE still resides in the current serving cell and the acquisition situation of the location information does not meet the preset condition.

FIG. 7 shows a schematic flowchart of a method for determining a serving cell according to embodiments of the present disclosure. Based on embodiments shown in FIG. 3 to FIG. 5, as shown in FIG. 7, the method may be performed by a UE, a current serving cell of the UE is an NTN cell, and the UE is currently in a non-connected state. The method may include, but is not limited to, the following steps.

In step S701, when an acquisition situation of location information of the UE does not meet a preset condition, information that the acquisition situation of the location information of the UE does not meet the preset condition is recorded via a minimization drive test record.

In embodiments of the present disclosure, based on a preconfigured minimization drive test (MDT) record trigger condition, when the acquisition situation of the location information of the UE does not meet the preset condition, the UE may perform the MDT record to record the information about the acquisition situation of the location information of the UE not meeting the preset condition.

The preconfigured MDT record trigger condition may be preconfigured by a network device. For example, the network device may configure a logged MDT for the UE when the UE is in a connected state, and the acquisition situation of the location information of the UE not meeting the preset condition is configured as a trigger condition to perform the MDT record.

After recording the information about the acquisition situation of the location information of the UE not meeting the preset condition, the UE may report the information to the network device via a UE information reporting process.

In step S702, a new serving cell is determined via a cell selection.

For details and specific implementations of the step S702, reference may be made to the relevant descriptions of the steps S301, S401, and S501, which will not be repeated here.

By implementing embodiments of the present disclosure, for a UE whose acquisition situation of the location information does not meet the preset condition, if the UE is in the non-connected state, by performing the MDT record to record the information about the acquisition situation of the location information of the UE not meeting the preset condition and by performing the cell selection, the information about the acquisition situation of the location information of the UE not meeting the preset condition may be notified to the network device, and the new serving cell may be also determined for the UE, so the following problem may be solved: the communication cannot be performed normally because the UE is unable to perform the uplink synchronization as the UE still resides in the current serving cell and the acquisition situation of the location information does not meet the preset condition.

FIG. 8 shows a schematic flowchart of a method for determining a serving cell according to embodiments of the present disclosure. Based on embodiments shown in FIG. 6, as shown in FIG. 8, the method may be applied to a UE, a current serving cell of the UE is an NTN cell, and the UE is currently in a non-connected state. The method may include, but is not limited to, the following steps.

In step S801, when an acquisition situation of location information of the UE does not meet a preset condition, information that the acquisition situation of the location information of the UE does not meet the preset condition is recorded via a minimization drive test record.

In embodiments of the present disclosure, based on a preconfigured minimization drive test (MDT) record trigger condition, when the acquisition situation of the location information of the UE does not meet the preset condition, the UE may perform the MDT record to record the information about the acquisition situation of the location information of the UE not meeting the preset condition.

The preconfigured MDT record trigger condition may be preconfigured by a network device. For example, the network device may configure a logged MDT for the UE when the UE is in a connected state, and the acquisition situation of the location information of the UE not meeting the preset condition is configured as a trigger condition to perform the MDT record.

After recording the information about the acquisition situation of the location information of the UE not meeting the preset condition, the UE may report the information to the network device via a UE information reporting process.

In step S802, a cell measurement is performed based on a preset measurement standard.

For details and specific implementations of the step S802, reference may be made to the relevant descriptions of the step S601, which will not be repeated here.

In step S803, a new serving cell is determined via a cell selection.

For details and specific implementations of the step S803, reference may be made to the relevant descriptions of the steps S301, S401, and S501, which will not be repeated here.

By implementing embodiments of the present disclosure, for a UE whose acquisition situation of the location information does not meet the preset condition, if the UE is in the non-connected state, by performing the MDT record to record the information about the acquisition situation of the location information of the UE not meeting the preset condition, and by performing the cell measurement and the cell selection, the information about the acquisition situation of the location information of the UE not meeting the preset condition may be notified to the network device, and the new serving cell may be also determined for the UE, so the following problem may be solved: the communication cannot be performed normally because the UE is unable to perform the uplink synchronization as the UE still resides in the current serving cell and the acquisition situation of the location information does not meet the preset condition.

FIG. 9 shows a schematic flowchart of a method for determining a serving cell according to embodiments of the present disclosure. As shown in FIG. 9, the method may be performed by a UE, a current serving cell of the UE is an NTN cell, and the UE is currently in a connected state. The method provides a manner for determining a new serving cell for the UE when an acquisition situation of location information of the UE does not meet a preset condition, and the method may include, but is not limited to, a following step.

In step S901, when the acquisition situation of the location information of the UE does not meet the preset condition, a serving cell of the UE is handed over from the NTN cell to the new serving cell according to preconfigured handover information. The preconfigured handover information is configured to indicate a TN cell that is capable of being used as the new serving cell when the acquisition situation of the location information of the UE does not meet the preset condition.

In embodiments of the present disclosure, the UE being in the connected state may refer to that, for example, the UE is currently connected to a network device.

The location information of the UE may only refer to a certain type of location information, for example, GNSS location information, or may refer to location information obtained by various other positioning methods, for example, the location information obtained by an LET/NR positioning, a Wi-Fi/Bluetooth positioning, or others.

In some embodiments, the acquisition situation of the location information of the UE not meeting the preset condition may include that the acquisition situation of the location information of the UE does not meet the preset condition, and a duration for which the acquisition situation of the location information does not meet the preset condition reaches a preset duration.

In practical applications, the acquisition situation of the location information of the UE may not meet the preset condition at a certain point in time or only in a very short period of time due to emergencies, and the acquisition situation of the location information of the UE may recover to meet the preset condition in a short time. In this case, determining the new serving cell for the UE does not have obvious advantages or even causes additional overhead compared to allowing the UE to still reside in the current serving cell. That is, in this case, there is no need to determine the new serving cell for the UE.

Therefore, in practical applications, when the duration for which the acquisition situation of the location information of the UE does not meet the preset condition reaches the preset duration, the new serving cell may be determined for the UE. The preset duration may be determined based on experience. For example, if it is known from historical data that when the duration for which the acquisition situation of the location information of the UE does not meet the preset condition reaches several seconds, unacceptable communication problems will occur, then the preset duration may be set to the several seconds.

In some embodiments, the above preset condition may include any one of: the location information not being obtained by the UE; or the location information being obtained by the UE, but at least one of a confidence and an uncertainty of the location information not meeting a preset threshold value requirement.

Specifically, the acquisition situation of the location information of the UE not meeting the preset condition may be that the UE cannot obtain the location information, or may be that a duration for which the UE cannot obtain the location information reaches the preset duration. For example, the UE cannot obtaining the location information may be that the UE cannot obtain the location information by a specific positioning method, or that the UE cannot obtain the location information by any positioning methods.

In addition, the acquisition situation of the location information of the UE not meeting the preset condition may also be that the UE can obtain the location information, but the confidence and/or the uncertainty of the obtained location information does not meet the preset threshold value requirement, or may also be that the UE can obtain the location information, but a duration for which the confidence and/or the uncertainty of the obtained location information does not meet the preset value requirement reaches a preset duration. The confidence of the location information represents a credibility of the location information, and the uncertainty of the location information represents an available accuracy of the location information. In some embodiments, the above preset threshold value requirement may include a threshold value for the confidence and/or the uncertainty. For example, when the threshold value for the confidence is 30%, and the threshold value for the uncertainty is 100 meters, the acquisition situation of the location information of the UE not meeting the preset condition may be that the confidence of the location information obtained by the UE is lower than 30%, and/or the uncertainty of the position information is greater than 100 meters. For another example, the acquisition situation of the location information of the UE not meeting the preset condition may also be that a duration for which the confidence of the location information obtained by the UE is lower than 30% reaches a certain duration, and/or that a duration for which the uncertainty of the location information is greater than 100 meters reaches a certain duration. In some embodiments, in addition to the threshold value for the confidence and/or the uncertainty, the above preset threshold value requirement may also include a tolerance limit. For example, when a tolerance limit for the confidence and the uncertainty is 5%, the acquisition situation of the location information of the UE not meeting the preset condition may be that the confidence of the location information obtained by the UE is lower than (30% - 5 %), and/or the uncertainty of the position information obtained by the UE is greater than (100 meters + 100*5% meters). The tolerance limit for the uncertainty may also be expressed as a specific numerical value, such as 10, then the acquisition situation of the location information of the UE not meeting the preset condition may be that the uncertainty of the location information obtained by the UE is greater than (100 meters + 10 meters), etc.

In some embodiments, the above preset threshold value requirement may be notified to the UE by the network device using a dedicated message via a broadcast message or an RRC signaling.

In embodiments of the present disclosure, when the current serving cell of the UE is an NTN serving cell, if the UE is currently in the connected state, and the acquisition situation of the location information of the UE does not meet the preset condition, the UE may perform a handover based on the preconfigured handover information to hand over to the new serving cell. The preconfigured handover information may be preconfigured in the UE. In order to avoid a communication problem caused by the occurrence of the acquisition situation of the location information not meeting the preset condition again due to re-determining an NTN serving cell for the UE, a handover trigger condition configured in the preconfigured handover information includes the acquisition situation of the location information of the UE not meeting the preset condition, and a handover target cell configured therein is a TN cell.

For example, when the current serving cell of the UE is an NTN serving cell, and the acquisition situation of the location information of the UE does not meet the preset condition, the UE is triggered to perform a handover process to hand over to the handover target cell configured in the preconfigured handover information.

By implementing embodiments of the present disclosure, for a UE whose acquisition situation of the location information does not meet the preset condition, if the UE is in the connected state, by performing a handover according to the preconfigured handover information to hand over to the TN cell as the new serving cell, a communication problem caused by the following reasons may be avoided: the UE still resides in the current NTN serving cell, and the acquisition situation of the location information does not meet the preset condition.

FIG. 10 shows a schematic flowchart of a method for determining a serving cell according to embodiments of the present disclosure. As shown in FIG. 10, the method may be performed by a UE, a current serving cell of the UE is an NTN cell, and the UE is currently in a connected state. The method provides a manner for determining a new serving cell for the UE when an acquisition situation of location information of the UE does not meet a preset condition, and the method may include, but is not limited to, a following step.

In step S 1001, when the acquisition situation of the location information of the UE does not meet the preset condition, a first message is sent to a network device. The first message is configured to indicate the network device to hand over a serving cell of the UE from the NTN cell to a TN cell.

In embodiments of the present disclosure, the UE being in the connected state may refer to that, for example, the UE is currently connected to the network device.

The location information of the UE may only refer to a certain type of location information, for example, GNSS location information, or may refer to location information obtained by various other positioning methods, for example, the location information obtained by an LET/NR positioning, a Wi-Fi/Bluetooth positioning, or others.

In some embodiments, the acquisition situation of the location information of the UE not meeting the preset condition may include that the acquisition situation of the location information of the UE does not meet the preset condition, and a duration for which the acquisition situation of the location information does not meet the preset condition reaches a preset duration.

In practical applications, the acquisition situation of the location information of the UE may not meet the preset condition at a certain point in time or only in a very short period of time due to emergencies, and the acquisition situation of the location information of the UE may recover to meet the preset condition in a short time. In this case, determining the new serving cell for the UE does not have obvious advantages or even causes additional overhead compared to allowing the UE to still reside in the current serving cell. That is, in this case, there is no need to determine the new serving cell for the UE.

Therefore, in practical applications, when the duration for which the acquisition situation of the location information of the UE does not meet the preset condition reaches the preset duration, the new serving cell may be determined for the UE. The preset duration may be determined based on experience. For example, if it is known from historical data that when the duration for which the acquisition situation of the location information of the UE does not meet the preset condition reaches several seconds, unacceptable communication problems will occur, then the preset duration may be set to the several seconds.

In some embodiments, the above preset condition may include any one of: the location information not being obtained by the UE; or the location information being obtained by the UE, but at least one of a confidence and an uncertainty of the location information not meeting a preset threshold value requirement.

Specifically, the acquisition situation of the location information of the UE not meeting the preset condition may be that the UE cannot obtain the location information, or may be that a duration for which the UE cannot obtain the location information reaches the preset duration. For example, the UE cannot obtaining the location information may be that the UE cannot obtain the location information by a specific positioning method, or that the UE cannot obtain the location information by any positioning methods.

In addition, the acquisition situation of the location information of the UE not meeting the preset condition may also be that the UE can obtain the location information, but the confidence and/or the uncertainty of the obtained location information does not meet the preset threshold value requirement, or may also be that the UE can obtain the location information, but a duration for which the confidence and/or the uncertainty of the obtained location information does not meet the preset value requirement reaches a preset duration. The confidence of the location information represents a credibility of the location information, and the uncertainty of the location information represents an available accuracy of the location information. In some embodiments, the above preset threshold value requirement may include a threshold value for the confidence and/or the uncertainty. For example, when the threshold value for the confidence is 30%, and the threshold value for the uncertainty is 100 meters, the acquisition situation of the location information of the UE not meeting the preset condition may be that the confidence of the location information obtained by the UE is lower than 30%, and/or the uncertainty of the position information is greater than 100 meters. For another example, the acquisition situation of the location information of the UE not meeting the preset condition may also be that a duration for which the confidence of the location information obtained by the UE is lower than 30% reaches a certain duration, and/or that a duration for which the uncertainty of the location information is greater than 100 meters reaches a certain duration. In some embodiments, in addition to the threshold value for the confidence and/or the uncertainty, the above preset threshold value requirement may also include a tolerance limit. For example, when a tolerance limit for the confidence and the uncertainty is 5%, the acquisition situation of the location information of the UE not meeting the preset condition may be that the confidence of the location information obtained by the UE is lower than (30% - 5 %), and/or the uncertainty of the position information obtained by the UE is greater than (100 meters + 100*5% meters). The tolerance limit for the uncertainty may also be expressed as a specific numerical value, such as 10, then the acquisition situation of the location information of the UE not meeting the preset condition may be that the uncertainty of the location information obtained by the UE is greater than (100 meters + 10 meters), etc.

In some embodiments, the above preset threshold value requirement may be notified to the UE by the network device using a dedicated message via a broadcast message or an RRC signaling.

In embodiments of the present disclosure, when the current serving cell of the UE is an NTN serving cell, if the UE is currently in the connected state, and the acquisition situation of the location information of the UE does not meet the preset condition, the UE may send a message used to indicate the network device to perform a handover process to the network device, and after receiving the message, the network device performs a handover to hand over the serving cell of the UE from the NTN cell to a TN cell as the new serving cell.

For example, the UE reports to the network device a message indicating that the acquisition situation of the location information does not meet the preset condition. After the network device receives the message, if it is found that the current NTN serving cell of the UE is a primary cell (PCell), the network device may trigger a PCell handover process to hand over the serving cell of the UE from the NTN cell to the TN cell; if it is found that the current NTN serving cell of the UE is a primary secondary cell (PSCell), the network device may trigger a PScell replacing process to hand over the serving cell of the UE from the NTN cell to the TN cell; and if it is found that the current NTN serving cell of the UE is a secondary cell (SCell), the network device may trigger a Scell removing or deactivating process, so that the NTN cell cannot serve as the serving cell, and the serving cell of the UE is handed over to the TN cell.

In some embodiments, after receiving the message, the network device may send a measurement indication message to the UE, so as to indicate the UE to perform a cell measurement and report a measurement report including a cell measurement result, and the network device determines a target cell to which the UE will be handed over according to the measurement report reported by the UE when performing the above handover process.

In some embodiments, sending the first message to the network device may be implemented by the following steps:
sending the first message to the network device via a media access control control element (MAC CE) signaling; or
based on a preconfigured trigger condition, sending the first message to the network device via a radio resource control (RRC) signaling, in which the preconfigured trigger condition includes the acquisition situation of the location information not meeting the preset condition.

Specifically, the UE may report for example a message indicating that the acquisition situation of the location information does not meet the preset condition to the network device via the MAC CE signaling or via the RRC signaling. When the message is reported via the MAC CE signaling, if there is currently no available uplink resource for reporting the message, a scheduling request (SR) process may be triggered to request the uplink resource for reporting the message. When the message is reported via the RRC signaling, it may be reported via the measurement report based on a preconfigured reporting trigger condition. The preconfigured trigger condition may be preconfigured by the network device and notified to the UE. When the acquisition situation of the location information of the UE does not meet the preset condition, reporting the measurement report is triggered, so that the message indicating that the acquisition situation of the location information does not meet the preset condition is reported to the network device. The UE may report the message and the cell measurement result in the measurement report at the same time, or may only report the message in the measurement report.

By implementing embodiments of the present disclosure, for a UE whose acquisition situation of the location information does not meet the preset condition, if the UE is in the connected state, by sending the message used to indicate the network device to perform the handover process to the network device, the network device hands over the serving cell of the UE to the TN cell as the new serving cell, thereby avoiding a communication problem caused by the UE still residing in the current NTN serving cell and the acquisition situation of the location information not meeting the preset condition.

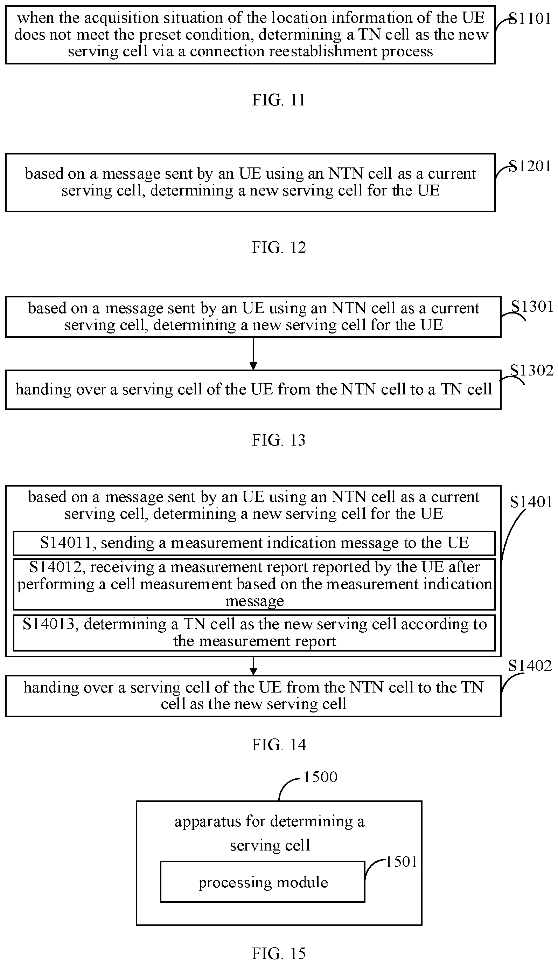

FIG. 11 shows a schematic flowchart of a method for determining a serving cell according to embodiments of the present disclosure. As shown in FIG. 11, the method may be performed by a UE, a current serving cell of the UE is an NTN cell, and the UE is currently in a connected state. The method provides a manner for determining a new serving cell for the UE when an acquisition situation of location information of the UE does not meet a preset condition, and the method may include, but is not limited to, a following step.

In step S1101, when the acquisition situation of the location information of the UE does not meet the preset condition, a TN cell is determined as the new serving cell via a connection reestablishment process.

In embodiments of the present disclosure, the UE being in the connected state may refer to that, for example, the UE is currently connected to a network device.

The location information of the UE may only refer to a certain type of location information, for example, GNSS location information, or may refer to location information obtained by various other positioning methods, for example, the location information obtained by an LET/NR positioning, a Wi-Fi/Bluetooth positioning, or others.

In some embodiments, the acquisition situation of the location information of the UE not meeting the preset condition may include that the acquisition situation of the location information of the UE does not meet the preset condition, and a duration for which the acquisition situation of the location information does not meet the preset condition reaches a preset duration.

In practical applications, the acquisition situation of the location information of the UE may not meet the preset condition at a certain point in time or only in a very short period of time due to emergencies, and the acquisition situation of the location information of the UE may recover to meet the preset condition in a short time. In this case, determining the new serving cell for the UE does not have obvious advantages or even causes additional overhead compared to allowing the UE to still reside in the current serving cell. That is, in this case, there is no need to determine the new serving cell for the UE.

Therefore, in practical applications, when the duration for which the acquisition situation of the location information of the UE does not meet the preset condition reaches the preset duration, the new serving cell may be determined for the UE. The preset duration may be determined based on experience. For example, if it is known from historical data that when the duration for which the acquisition situation of the location information of the UE does not meet the preset condition reaches several seconds, unacceptable communication problems will occur, then the preset duration may be set to the several seconds.

In some embodiments, the above preset condition may include any one of: the location information not being obtained by the UE; or the location information being obtained by the UE, but at least one of a confidence and an uncertainty of the location information not meeting a preset threshold value requirement.

Specifically, the acquisition situation of the location information of the UE not meeting the preset condition may be that the UE cannot obtain the location information, or may be that a duration for which the UE cannot obtain the location information reaches the preset duration. For example, the UE cannot obtaining the location information may be that the UE cannot obtain the location information by a specific positioning method, or that the UE cannot obtain the location information by any positioning methods.

In addition, the acquisition situation of the location information of the UE not meeting the preset condition may also be that the UE can obtain the location information, but the confidence and/or the uncertainty of the obtained location information does not meet the preset threshold value requirement, or may also be that the UE can obtain the location information, but a duration for which the confidence and/or the uncertainty of the obtained location information does not meet the preset value requirement reaches a preset duration. The confidence of the location information represents a credibility of the location information, and the uncertainty of the location information represents an available accuracy of the location information. In some embodiments, the above preset threshold value requirement may include a threshold value for the confidence and/or the uncertainty. For example, when the threshold value for the confidence is 30%, and the threshold value for the uncertainty is 100 meters, the acquisition situation of the location information of the UE not meeting the preset condition may be that the confidence of the location information obtained by the UE is lower than 30%, and/or the uncertainty of the position information is greater than 100 meters. For another example, the acquisition situation of the location information of the UE not meeting the preset condition may also be that a duration for which the confidence of the location information obtained by the UE is lower than 30% reaches a certain duration, and/or that a duration for which the uncertainty of the location information is greater than 100 meters reaches a certain duration. In some embodiments, in addition to the threshold value for the confidence and/or the uncertainty, the above preset threshold value requirement may also include a tolerance limit. For example, when a tolerance limit for the confidence and the uncertainty is 5%, the acquisition situation of the location information of the UE not meeting the preset condition may be that the confidence of the location information obtained by the UE is lower than (30% - 5 %), and/or the uncertainty of the position information obtained by the UE is greater than (100 meters + 100*5% meters). The tolerance limit for the uncertainty may also be expressed as a specific numerical value, such as 10, then the acquisition situation of the location information of the UE not meeting the preset condition may be that the uncertainty of the location information obtained by the UE is greater than (100 meters + 10 meters), etc.

In some embodiments, the above preset threshold value requirement may be notified to the UE by the network device using a dedicated message via a broadcast message or an RRC signaling.

In embodiments of the present disclosure, when the current serving cell of the UE is an NTN serving cell, if the UE is currently in the connected state, and the acquisition situation of the location information of the UE does not meet the preset condition, the UE may consider that a radio link failure (RLF) currently occurs. In this case, the UE may initiate the connection reestablishment process, so as to reestablish to other cells, such as to a TN cell as the new serving cell.

By implementing embodiments of the present disclosure, for a UE whose acquisition situation of the location information does not meet the preset condition, if the UE is in the connected state, the connection reestablishment process is initiated, so as to reestablish to the TN cell as the new serving cell, thereby avoiding a communication problem caused by the UE still residing in the current NTN serving cell and the acquisition situation of the location information not meeting the preset condition.

FIG. 12 shows a schematic flowchart of another method for determining a serving cell according to embodiments of the present disclosure. As shown in FIG. 12, the method may be performed by a network device, and the method may include, but is not limited to, a following step.

In step S1201, based on a message sent by a UE using an NTN cell as a current serving cell, a new serving cell is determined for the UE. The message is sent by the UE when an acquisition situation of location information does not meet a preset condition.

In embodiments of the present disclosure, when the acquisition situation of the location information of the UE using the NTN cell as the current serving cell does not meet the preset condition, if the UE is currently in a connected state, the UE may send the message to the network device, and the network device may determine the new serving cell for the UE based on the received message.

In embodiments of the present disclosure, the location information of the UE may only refer to a certain type of location information, for example, global navigation satellite system (GNSS) location information, or may refer to location information obtained by various other positioning methods, for example, location information obtained by a long term evolution (LET)/new radio (NR) positioning, a Wi-Fi/Bluetooth positioning, or others.

In some embodiments, the acquisition situation of the location information of the UE not meeting the preset condition may include that the acquisition situation of the location information of the UE does not meet the preset condition, and a duration for which the acquisition situation does not meet the preset condition reaches a preset duration.

In practical applications, the acquisition situation of the location information of the UE may not meet the preset condition at a certain point in time or only in a very short period of time due to emergencies, and the acquisition situation of the location information of the UE may recover to meet the preset condition in a short time. In this case, determining the new serving cell for the UE does not have obvious advantages or even causes additional overhead compared to allowing the UE to still reside in the current serving cell. That is, in this case, there is no need to determine the new serving cell for the UE.

Therefore, in practical applications, when the duration for which the acquisition situation of the location information of the UE does not meet the preset condition reaches the preset duration, the new serving cell may be determined for the UE. The preset duration may be determined based on experience. For example, if it is known from historical data that when the duration for which the acquisition situation of the location information of the UE does not meet the preset condition reaches several seconds, unacceptable communication problems will occur, then the preset duration may be set to the several seconds.

In some embodiments, the above preset condition may include any one of: the location information not being obtained by the UE; or the location information being obtained by the UE, but at least one of a confidence and an uncertainty of the location information not meeting a preset threshold value requirement.

Specifically, the acquisition situation of the location information of the UE not meeting the preset condition may be that the UE cannot obtain the location information, or may be that a duration for which the UE cannot obtain the location information reaches the preset duration. For example, the UE cannot obtaining the location information may be that the UE cannot obtain the location information by a specific positioning method, or that the UE cannot obtain the location information by any positioning methods.

In addition, the acquisition situation of the location information of the UE not meeting the preset condition may also be that the UE can obtain the location information, but the confidence and/or the uncertainty of the obtained location information does not meet the preset threshold value requirement, or may also be that the UE can obtain the location information, but a duration for which the confidence and/or the uncertainty of the obtained location information does not meet the preset value requirement reaches a preset duration. The confidence of the location information represents a credibility of the location information, and the uncertainty of the location information represents an available accuracy of the location information. In some embodiments, the above preset threshold value requirement may include a threshold value for the confidence and/or the uncertainty. For example, when the threshold value for the confidence is 30%, and the threshold value for the uncertainty is 100 meters, the acquisition situation of the location information of the UE not meeting the preset condition may be that the confidence of the location information obtained by the UE is lower than 30%, and/or the uncertainty of the position information is greater than 100 meters. For another example, the acquisition situation of the location information of the UE not meeting the preset condition may also be that a duration for which the confidence of the location information obtained by the UE is lower than 30% reaches a certain duration, and/or that a duration for which the uncertainty of the location information is greater than 100 meters reaches a certain duration. In some embodiments, in addition to the threshold value for the confidence and/or the uncertainty, the above preset threshold value requirement may also include a tolerance limit. For example, when a tolerance limit for the confidence and the uncertainty is 5%, the acquisition situation of the location information of the UE not meeting the preset condition may be that the confidence of the location information obtained by the UE is lower than (30% - 5 %), and/or the uncertainty of the position information obtained by the UE is greater than (100 meters + 100*5% meters). The tolerance limit for the uncertainty may also be expressed as a specific numerical value, such as 10, then the acquisition situation of the location information of the UE not meeting the preset condition may be that the uncertainty of the location information obtained by the UE is greater than (100 meters + 10 meters), etc.

In some embodiments, the above preset threshold value requirement may be notified to the UE by the network device using a dedicated message via a broadcast message or an RRC signaling.

By implementing embodiments of the present disclosure, the network device determines the new serving cell for the UE based on the message sent by the UE when the acquisition situation of the location information does not meet the preset condition, so the following problem may be solved: the communication cannot be performed normally because the UE is unable to perform the uplink synchronization as the UE still resides in the current serving cell and the acquisition situation of the location information does not meet the preset condition.

FIG. 13 shows a schematic flowchart of another method for determining a serving cell according to embodiments of the present disclosure. Based on embodiments shown in FIG. 12, as shown in FIG. 13, the method may be performed by a network device, and the method may include, but is not limited to, the following steps.

In step S1301, based on a message sent by a UE using an NTN cell as a current serving cell, a new serving cell is determined for the UE. The message is sent by the UE when an acquisition situation of location information does not meet a preset condition.

For detailed descriptions of the above step S1301, reference may be made to the relevant descriptions of the step S1201, which will not be repeated here.

In step S1302, a serving cell of the UE is handed over from the NTN cell to a TN cell.

In embodiments of the present disclosure, after receiving the message indicating that the acquisition situation of the location information does not meet the preset condition, the network device performs a handover to hand over the serving cell of the UE from the NTN cell to the TN cell as the new serving cell.

For example, the UE reports to the network device a message indicating that the acquisition situation of the location information does not meet the preset condition. After the network device receives the message, if it is found that the current NTN serving cell of the UE is a primary cell (PCell), the network device may trigger a PCell handover process to hand over the serving cell of the UE from the NTN cell to the TN cell; if it is found that the current NTN serving cell of the UE is a primary secondary cell (PSCell), the network device may trigger a PScell replacing process to hand over the serving cell of the UE from the NTN cell to the TN cell; and if it is found that the current NTN serving cell of the UE is a secondary cell (SCell), the network device may trigger a Scell removing or deactivating process, so that the NTN cell cannot serve as the serving cell, and the serving cell of the UE is handed over to the TN cell.

In some embodiments, the message indicating that the acquisition situation of the location information does not meet the preset condition may be reported to the network device by any of following ways: reporting the message to the network device via a media access control control element (MAC CE) signaling; and based on a preconfigured reporting trigger condition, reporting the message to the network device in a measurement report via a radio resource control (RRC) signaling. The preconfigured reporting trigger condition includes the acquisition situation of the location information not meeting the preset condition.

Specifically, the UE may report the message indicating that the acquisition situation of the location information does not meet the preset condition to the network device via the MAC CE signaling or via the RRC signaling. When the message is reported via the MAC CE signaling, if there is currently no available uplink resource for reporting the message, a scheduling request (SR) process may be triggered to request the uplink resource for reporting the message. When the message is reported via the RRC signaling, it may be reported via the measurement report based on the preconfigured reporting trigger condition. The preconfigured trigger condition may be preconfigured by the network device and notified to the UE. When the acquisition situation of the location information of the UE does not meet the preset condition, reporting the measurement report is triggered, so that the message indicating that the acquisition situation of the location information does not meet the preset condition is reported to the network device. The UE may report the message and the cell measurement result in the measurement report at the same time, or may only report the message in the measurement report.

By implementing embodiments of the present disclosure, the network device hands over the serving cell of the UE to the TN cell as the new serving cell based on the message sent by the UE when the acquisition situation of the location information does not meet the preset condition, thereby avoiding a communication problem caused by the UE still residing in the current NTN serving cell and the acquisition situation of the location information not meeting the preset condition.

FIG. 14 shows a schematic flowchart of another method for determining a serving cell according to embodiments of the present disclosure. Based on embodiments shown in FIG. 12 and FIG. 13, as shown in FIG. 14, the method may be performed by a network device, and the method may include, but is not limited to, the following steps.

In step S1401, based on a message sent by a UE using an NTN cell as a current serving cell, a new serving cell is determined for the UE. The message is sent by the UE when an acquisition situation of location information does not meet a preset condition.

For detailed descriptions of the above step S1401, reference may be made to the relevant descriptions of the step S1201, which will not be repeated here.

In some embodiments, the above step S1401 may be implemented by the following steps.

In step S14011, a measurement indication message is sent to the UE.

In step S14012, a measurement report reported by the UE after performing a cell measurement based on the measurement indication message is received.

In step S14013, a TN cell is determined as the new serving cell according to the measurement report.

In embodiments of the present disclosure, after receiving a message indicating that the acquisition situation of the location information of the UE does not meet the preset condition, the network device may send the measurement indication message to the UE to indicate the UE to perform the cell measurement and report a measurement result including a cell measurement result, and the network device determines a target cell to which the UE will be handed over according to the measurement report reported by the UE.

In step S1402, a serving cell of the UE is handed over from the NTN cell to a TN cell as the new serving cell.

For detailed descriptions of the above step S1402, reference may be made to the relevant descriptions of the step S 1302, which will not be repeated here.

By implementing embodiments of the present disclosure, the network device sends the measurement indication message to the UE based on the message sent by the UE when the acquisition situation of the location information does not meet the preset condition, determines the TN cell to be used as the new serving cell according to the measurement report reported by the UE based on the measurement indication message, and hands over the serving cell of the UE to the TN cell, so that an optimal TN cell may be selected as the new serving cell for the UE, thereby avoiding a communication problem caused by the UE still residing in the current NTN serving cell and the acquisition situation of the location information not meeting the preset condition.

In the above embodiments provided by the present disclosure, the methods provided in embodiments of the present disclosure are introduced from perspectives of the network device and the user equipment respectively. In order to implement the various functions in the methods provided by the above embodiments of the present disclosure, the network device and the terminal device may include a hardware structure and a software module, and implement the above functions in a form of the hardware structure, the software module, or the hardware structure plus the software module. A certain function among the above mentioned functions may be implemented in the form of the hardware structure, the software module, or the hardware structure plus the software module.

Corresponding to the method for determining the serving cell provided by the above several kinds of embodiments, the present disclosure also provides an apparatus for determining a serving cell. Because the apparatus for determining the serving cell provided by embodiments of the present disclosure corresponds to the method for determining the serving cell provided by the above several kinds of embodiments, so the implementations of the method for determining the serving cell are also applicable to the apparatus for determining the serving cell provided in embodiments of the present disclosure, which will not be described in detail here. FIG. 15 is a schematic block diagram of an apparatus for determining a serving cell provided according to the present disclosure.

FIG. 15 is a schematic block diagram of the apparatus 1500 for determining the serving cell provided by embodiments of the present disclosure. The apparatus 1500 for determining the serving cell may be applied to a UE. A current serving cell of the UE is a non-terrestrial network (NTN) cell.

As shown in FIG. 15, the apparatus 1500 for determining the serving cell includes: a processing module 1501 configured to determine a new serving cell when an acquisition situation of location information of the UE does not meet a preset condition.

By implementing embodiments of the present disclosure, for a UE whose acquisition situation of the location information does not meet the preset condition, by determining the new serving cell for the UE, the following problem may be solved: the communication cannot be performed normally because the UE is unable to perform the uplink synchronization as the UE still resides in the current serving cell and the acquisition situation of the location information does not meet the preset condition.

In some embodiments, the processing module 1501 is configured to: determine a new serving cell, when the acquisition situation does not meet the preset condition, and a duration for which the acquisition situation does not meet the preset condition reaches a preset duration.

In some embodiments, the preset condition includes any one of: the location information not being obtained by the UE; or the location information being obtained by the UE, but at least one of a confidence and an uncertainty of the location information not meeting a preset threshold value requirement.

In some embodiments, the processing module 1501 is configured to: determine the new serving cell via a cell selection. The UE is in a non-connected state.

In some embodiments, the processing module 1501 is configured to determine the new serving cell via the cell selection based on a following step: based on a preset frequency priority configuration, determining the new serving cell in an order from a high frequency priority to a low frequency priority. The preset frequency priority configuration is configured to indicate that a priority of a frequency used by an NTN cell is lower than a priority of a frequency used by a terrestrial network (TN) cell. The frequency used by the NTN cell is different from the frequency used by the TN cell.

In some embodiments, the processing module 1501 is configured to determine the new serving cell via the cell selection based on a following step: based on a preset cell priority configuration, determining the new serving cell in an order from a high cell priority to a low cell priority. The preset cell priority configuration is configured to indicate that a priority of an NTN cell is lower than a priority of a TN cell. The NTN cell and the TN cell can use the same frequency.

In some embodiments, the processing module 1501 is further configured to: perform a cell measurement based on a preset measurement standard.

In some embodiments, the preset measurement standard includes at least one of:
when a signal quality of the current serving cell is greater than a preset co-frequency measurement threshold, and the acquisition situation meets the preset condition, the cell measurement not being performed for a co-frequency cell, otherwise, the cell measurement being performed for the co-frequency cell, in which the co-frequency cell and the current serving cell use a same frequency;
when the signal quality of the current serving cell is greater than a preset inter-frequency measurement threshold, and the acquisition situation meets the preset condition, the cell measurement not being performed for a first type of cell, otherwise, the cell measurement being performed for the first type of cell, in which a priority of a frequency used by the first type of cell is equal to or lower than a priority of a frequency used by the current serving cell; or
when the signal quality of the current serving cell is greater than the preset inter-frequency measurement threshold, the UE is configured with a high-priority measurement relaxation, and the acquisition situation meets the preset condition, the cell measurement not being performed for a second type of cell, otherwise, the cell measurement being performed for the second type of cell, in which a priority of a frequency used by the second type of cell is higher than the priority of the frequency used by the current serving cell.

In some embodiments, the processing module 1501 is further configured to: record information that the acquisition situation does not meet the preset condition via a minimization drive test (MDT) record.

In some embodiments, the processing module 1501 is configured to: hand over a serving cell of the UE from the NTN cell to the new serving cell according to preconfigured handover information. The preconfigured handover information is configured to indicate a TN cell that is capable of being used as the new serving cell when the acquisition situation does not meet the preset condition. The UE is in a connected state.

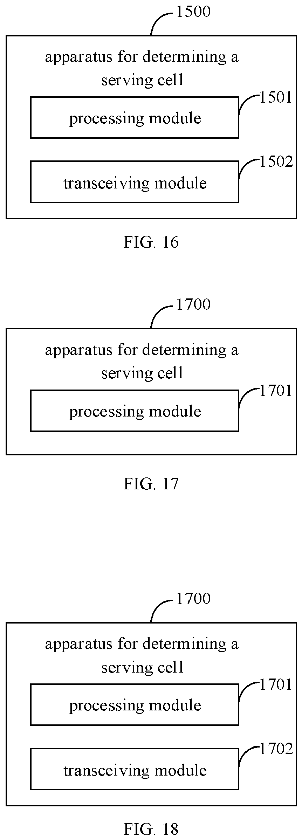

In some embodiments, as shown in FIG. 16, the apparatus 1500 further includes a transceiving module 1502, which is configured to: send a first message to a network device. The first message is configured to indicate the network device to hand over a serving cell of the UE from the NTN cell to a TN cell. The UE is in a connected state.

In some embodiments, the transceiving module 1502 is configured to: send the first message to the network device via a media access control control element (MAC CE) signaling; and based on a preconfigured trigger condition, send the first message to the network device via a radio resource control (RRC) signaling. The preconfigured trigger condition includes the acquisition situation not meeting the preset condition.

In some embodiments, the processing module 1501 is configured to: determine a TN cell as the new serving cell via a connection reestablishment process. The UE is in a connected state.

FIG. 17 is a schematic block diagram of another apparatus 1700 for determining a serving cell provided by embodiments of the present disclosure. The apparatus 1700 for determining the serving cell may be applied to a network device.

As shown in FIG. 17, the apparatus 1700 includes: a processing module 1701 configured to determine a new serving cell for a UE based on a message sent by the UE. A current serving cell of the UE is a non-terrestrial network (NTN) cell, and the message is sent by the UE when an acquisition situation of location information does not meet a preset condition.

By implementing embodiments of the present disclosure, based on the message sent by the UE when the acquisition situation of the location information does not meet the preset condition, the network device determines the new serving cell for the UE, so the following problem may be solved: the communication cannot be performed normally because the UE is unable to perform the uplink synchronization as the UE still resides in the current serving cell and the acquisition situation of the location information does not meet the preset condition.

In some embodiments, the message is sent by the UE when the acquisition situation does not meet the preset condition, and a duration for which the acquisition situation does not meet the preset condition reaches a preset duration.

In some embodiments, the preset condition includes any one of: the location information not being obtained by the UE; or the location information being obtained by the UE, but at least one of a confidence and an uncertainty of the location information not meeting a preset threshold value requirement.

In some embodiments, the processing module 1701 is configured to hand over a serving cell of the UE from the NTN cell to a TN cell.

In some embodiments, as shown in FIG. 18, the apparatus further includes a transceiving module 1702 configured to: send a measurement indication message to the UE; and receive a measurement report reported by the UE after performing a cell measurement based on the measurement indication message. The processing module 1701 is further configured to determine the TN cell as the new serving cell according to the measurement report.

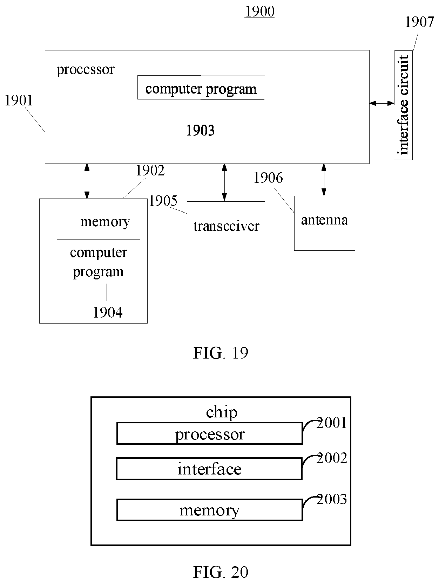

Please refer to FIG. 19, FIG. 19 is a schematic block diagram of a communication device 1900 provided by embodiments of the present disclosure. The communication device 1900 may be a network device, may also be a user equipment, may also be a chip, a chip system, or a processor that supports the network device to implement the above method, and may also be a chip, a chip system, or a processor that supports the terminal device to implement the above method. The device may be configured to implement the method as described in the above method embodiments, and for details, reference may be made to the descriptions in the above method embodiments.

The communications device 1900 may include one or more processors 1901. The processor 1901 may be a general-purpose processor or a special-purpose processor. For example, it may be a baseband processor or a central processing unit. The baseband processor may be configured to process a communication protocol and communication data, and the central processing unit may be configured to control a communication device (such as a base station, a baseband chip, a terminal device, a terminal device chip, a DU or a CU, etc.), execute computer programs, and process data of computer programs.

Optionally, the communication device 1900 may further include one or more memories 1902 having stored therein a computer program 1904. The processor 1901 executes the computer program 1904, to cause the communication device 1900 to implement the method as described in the above method embodiments. Optionally, the memory 1902 may have stored therein data. The communication device 1900 and the memory 1902 may be set separately or integrated together.

Optionally, the communication device 1900 may further include a transceiver 1905 and an antenna 1906. The transceiver 1905 may be called a transceiving element, a transceiving machine, a transceiving circuit or the like, for implementing a transceiving function. The transceiver 1905 may include a receiver and a transmitter. The receiver may be called a receiving machine, a receiving circuit or the like, for implementing a receiving function. The transmitter may be called a sending machine, a sending circuit or the like for implementing a sending function.

Optionally, the communication device 1900 may further include one or more interface circuits 1907. The interface circuit 1907 is configured to receive a code instruction and transmit the code instruction to the processor 1901. The processor 1901 runs the code instruction to enable the communication device 1900 to execute the methods as described in the foregoing method embodiments.

The communication device 1900 is the user equipment: the processor 1901 is configured to execute the step S201 in FIG. 2, the step S301 in FIG. 3, the step S401 in FIG. 4, the step S501 in FIG. 5, the steps S601 to S602 in FIG. 6, the steps S701 to S702 in FIG. 7, the steps S801 to S803 in FIG. 8, the step S901 in FIG. 9, and the step S1101 in FIG. 11; and the transceiver 1905 is configured to execute the step S 1001 in FIG. 10.

The communication device 1900 is the network device: the processor 1901 is configured to execute the step S1201 in FIG. 12, the steps S1301 to S1302 in FIG. 13, and the steps S14013 and S1402 in FIG. 14; and the transceiver 1905 is configured to execute the steps S14011 to S14012 in FIG. 14.

In an implementation manner, the processor 1901 may include the transceiver configured to implement receiving and sending functions. For example, the transceiver may be a transceiving circuit, an interface, or an interface circuit. The transceiving circuit, the interface or the interface circuit configured to implement the receiving and sending functions may be separated or may be integrated together. The above transceiving circuit, interface or interface circuit may be configured to read and write codes/data, or the above transceiving circuit, interface or interface circuit may be configured to transmit or transfer signals.

In an implementation manner, the processor 1901 may has stored therein a computer program 1903 that, when run on the processor 1901, causes the communication device 1900 to implement the method as described in the foregoing method embodiments. The computer program 1903 may be solidified in the processor 1901, and in this case, the processor 1901 may be implemented by a hardware.

In an implementation manner, the communication device 1900 may include a circuit, and the circuit may implement the sending, receiving or communicating function in the foregoing method embodiments. The processor and the transceiver described in the present disclosure may be implemented on an integrated circuit (IC), an analog IC, a radio frequency integrated circuit (RFIC), a mixed-signal IC, an application specific integrated circuit (ASIC), a printed circuit board (PCB), an electronic device, etc. The processor and the transceiver may also be manufactured using various IC process technologies, such as a complementary metal oxide semiconductor (CMOS), an nMetal-oxide-semiconductor (NMOS), a positive channel metal oxide semiconductor (PMOS), a bipolar junction transistor (BJT), a bipolar CMOS (BiCMOS), silicon germanium (SiGe), gallium arsenide (GaAs), etc.

The communication device described in the above embodiments may be the network device or the terminal device (such as the first terminal device in the foregoing method embodiments), but the scope of the communication device described in the present disclosure is not limited thereto, and a structure of the communication device is not limited by FIG. 19. The communication device may be a stand-alone device or may be a part of a larger device. For example, the communication device may be:
(1) a stand-alone integrated circuit (IC), or a chip, or a chip system or a subsystem;
(2) a set of one or more ICs, optionally, the set of ICs may also include a storage component for storing data and computer programs;
(3) an ASIC, such as a modem;
(4) a module that may be embedded in other devices;
(5) a receiver, a terminal device, an intelligent terminal device, a cellular phone, a wireless device, a handheld machine, a mobile unit, a vehicle device, a network device, a cloud device, an artificial intelligence device, etc.;
(6) others.

For the case where the communication device may be a chip or a chip system, reference may be made to a schematic structural diagram of the chip shown in FIG. 20. The chip shown in FIG. 20 includes a processor 2001 and an interface 2002. In the chip, one or more processors 2001 may be provided, and more than one interface 2002 may be provided.

For the case where the chip is used to implement functions of the user equipment in embodiments of the present disclosure: the processor 2001 is configured to execute the step S201 in FIG. 2, the step S301 in FIG. 3, the step S401 in FIG. 4, the step S501 in FIG. 5, the steps S601 to S602 in FIG. 6, the steps S701 to S702 in FIG. 7, the steps S801 to S803 in FIG. 8, the step S901 in FIG. 9, and the step S 1101 in FIG. 11; and the interface 2002 is configured to execute the step S1001 in FIG. 10.

For the case where the chip is used to implement functions of the network device in embodiments of the present disclosure: the processor 2001 is configured to execute the step S1201 in FIG. 12, the steps S1301 to S1302 in FIG. 13, and the steps S14013 and S1402 in FIG. 14 via the interface 2002; and the interface 2002 is configured to execute the steps S14011 to S14012 in FIG. 14.

Optionally, the chip further includes a memory 2003 for storing necessary computer programs and data.

Those skilled in the art may also understand that various illustrative logical blocks and steps listed in embodiments of the present disclosure may be implemented by an electronic hardware, a computer software, or a combination thereof. Whether such functions are implemented by a hardware or a software depends on specific applications and design requirements of an overall system. For each specific application, those skilled in the art may use various methods to implement the described functions, but such implementation should not be understood as beyond the protection scope of embodiments of the present disclosure.

Embodiments of the present disclosure also provide a system for implementing a serving cell determination. The system includes the communication apparatus as the user equipment as described in the aforementioned embodiments in FIG. 10 and the communication apparatus as the network device as described in the aforementioned embodiments in FIG. 11, or the system includes the communication device as the user equipment and the communication device as the network device as described in the aforementioned embodiments in FIG. 20.

The present disclosure also provides a readable storage medium having stored thereon instructions that, when executed by a computer, cause functions of any of the above method embodiments to be implemented.

The present disclosure also provides a computer program product that, when executed by a computer, causes functions of any of the above method embodiments to be implemented.

The above embodiments may be implemented in whole or in part by a software, a hardware, a firmware or any combination thereof. When implemented using the software, the above embodiments may be implemented in whole or in part in a form of the computer program product. The computer program product includes one or more computer programs. When the computer program is loaded and executed on the computer, all or part of the processes or functions according to embodiments of the present disclosure will be generated. The computer may be a general purpose computer, a special purpose computer, a computer network, or other programmable devices. The computer program may be stored in a computer-readable storage medium or transmitted from one computer-readable storage medium to another computer-readable storage medium. For example, the computer program may be transmitted from one website, computer, server or data center to another website site, computer, server or data center by a wired manner (such as via a coaxial cable, an optical fiber, a digital subscriber line (DSL)) or a wireless manner (such as infrared, wireless, or via microwave, etc.). The computer-readable storage medium may be any available medium that can be accessed by the computer, or a data storage device such as the server or the data center integrated with one or more available media. The available medium may be a magnetic medium (for example, a floppy disk, a hard disk, or a magnetic tape), an optical medium (for example, a high-density digital video disc (DVD)), or a semiconductor medium (for example, a solid state disk (SSD)) etc.

Those of ordinary skill in the art can understand that the first, second, and other numeral numbers involved in the present disclosure are only for convenience of description, and are not intended to limit the scope of embodiments of the present disclosure, and nor are they intended to represent sequential order.

The term "at least one" used in the present disclosure may also be described as one or more, and the term "a plurality of" may cover two, three, four or more, which are not limited in the present disclosure. In embodiments of the present disclosure, for a certain kind of technical feature, the technical features in this kind of technical feature are distinguished by term like "first", "second", "third", "A", "B", "C" and "D", etc., and these technical features described with the "first", "second", "third", "A", "B", "C" and "D" have no order of priority and have no order of size.

As used herein, the terms "machine-readable medium" and "computer-readable medium" refer to any computer program product, device, and/or apparatus (for example, a magnetic disk, an optical disk, a memory, a programmable logic device (PLD)) configured to provide machine instructions and/or data to a programmable processor, and includes machine-readable media that receive the machine instructions as machine-readable signals. The term "machine-readable signal" refers to any signal configured to provide the machine instructions and/or the data to the programmable processor.

The system and technique described herein may be implemented in a computing system that includes back-end components (for example, as a data server), or a computing system that includes middleware components (for example, an application server), or a computing system that includes front-end components (for example, a user computer having a graphical user interface or a web browser through which a user may interact with implementations of the system and technique described herein), or a computing system including any combination of such back-end components, middleware components, or front-end components. The components of the system may be interconnected by any form or medium of a digital data communication (for example, a communication network). Examples of the communication network include: a local area network (LAN), a wide area network (WAN), and an Internet.

A computer system may include a client and a server. The client and the server are generally remote from each other and typically interact via the communication network. A relationship of the client and the server is generated by the computer program running on a corresponding computer and having a client-server relationship with each other.

It should be understood that various forms of the process shown above may be used, with steps reordered, added or deleted. For example, each step described in the present disclosure may be executed in parallel, sequentially, or in a different order. As long as the desired results of the technical solutions disclosed in the present disclosure can be implemented, there is no limitation here.

In addition, it should be understood that the various embodiments described in the present disclosure may be implemented alone or in combination with other embodiments if the scheme allows.

Those of ordinary skill in the art can appreciate that the units and algorithm steps of various examples described in conjunction with embodiments disclosed herein may be implemented by the electronic hardware, or a combination of the computer software and the electronic hardware. Whether these functions are executed by the hardware or the software depends on the specific applications and design constraints of the technical solution. For each particular application, those skilled in the art may use different methods to implement the described functions, but such implementation should not be considered beyond the scope of the present disclosure.

Those skilled in the art can clearly understand that for the convenience and brevity of the description, the specific working process of the above-described system, device and unit may refer to the corresponding process in the foregoing method embodiments, which will not be repeated here.

The above only describes some specific implementations of the present disclosure, but the protection scope of the present disclosure is not limited thereto. Any changes or substitutions that are conceivable to those skilled in the art within the technical scope of the present disclosure should fall within the protection scope of the present disclosure. Therefore, the protection scope of the present disclosure should be determined by the protection scope of the claims.

## Claims

1. A method for determining a serving cell, performed by a user equipment (UE), wherein a current serving cell of the UE is a non-terrestrial network (NTN) cell, the method comprising:
when an acquisition situation of location information of the UE does not meet a preset condition, determining a new serving cell.

2. The method according to claim 1, wherein when the acquisition situation of the location information of the UE does not meet the preset condition, determining the new serving cell comprises:
when the acquisition situation does not meet the preset condition, and a duration for which the acquisition situation does not meet the preset condition reaches a preset duration, determining the new serving cell.

3. The method according to claim 1 or 2, wherein the preset condition comprises any one of:
the location information not being obtained by the UE; or
the location information being obtained by the UE, but at least one of a confidence and an uncertainty of the location information not meeting a preset threshold value requirement.

4. The method according to any one of claims 1 to 3, wherein determining the new serving cell comprises:
determining the new serving cell via a cell selection, wherein the UE is in a non-connected state.

5. The method according to claim 4, wherein determining the new serving cell via the cell selection comprises:
based on a preset frequency priority configuration, determining the new serving cell in an order from a high frequency priority to a low frequency priority, wherein the preset frequency priority configuration is configured to indicate that a priority of a frequency used by an NTN cell is lower than a priority of a frequency used by a terrestrial network (TN) cell, wherein the frequency used by the NTN cell is different from the frequency used by the TN cell.

6. The method according to claim 4, wherein determining the new serving cell via the cell selection comprises:
based on a preset cell priority configuration, determining the new serving cell in an order from a high cell priority to a low cell priority, wherein the preset cell priority configuration is configured to indicate that a priority of an NTN cell is lower than a priority of a TN cell; wherein the NTN cell and the TN cell use a same frequency.

7. The method according to any one of claims 4 to 6, further comprising:
based on a preset measurement standard, performing a cell measurement.

8. The method according to claim 7, wherein the preset measurement standard comprises at least one of:
when a signal quality of the current serving cell is greater than a preset co-frequency measurement threshold, and the acquisition situation meets the preset condition, the cell measurement not being performed for a co-frequency cell; otherwise, the cell measurement being performed for the co-frequency cell, wherein the co-frequency cell has a same frequency as the current serving cell;
when the signal quality of the current serving cell is greater than a preset inter-frequency measurement threshold, and the acquisition situation meets the preset condition, the cell measurement not being performed for a first type of cell; otherwise, the cell measurement being performed for the first type of cell, wherein a priority of a frequency used by the first type of cell is equal to or lower than a priority of a frequency used by the current serving cell; or
when the signal quality of the current serving cell is greater than the preset inter-frequency measurement threshold, the UE is configured with a high-priority measurement relaxation, and the acquisition situation meets the preset condition, the cell measurement not being performed for a second type of cell; otherwise, the cell measurement being performed for the second type of cell, wherein a priority of a frequency used by the second type of cell is higher than the priority of the frequency used by the current serving cell.

9. The method according to any one of claims 4 to 8, further comprising:
recording information that the acquisition situation does not meet the preset condition via a minimization drive test (MDT) record.

10. The method according to any one of claims 1 to 3, wherein determining the new serving cell comprises:
handing over a serving cell of the UE from the NTN cell to the new serving cell according to preconfigured handover information, wherein the preconfigured handover information is configured to indicate a TN cell that is capable of being used as the new serving cell when the acquisition situation does not meet the preset condition; wherein the UE is in a connected state.

11. The method according to any one of claims 1 to 3, further comprising:
sending a first message to a network device, wherein the first message is configured to indicate the network device to hand over a serving cell of the UE from the NTN cell to a TN cell, wherein the UE is in a connected state.

12. The method according to claim 11, wherein sending the first message to the network device comprises:
sending the first message to the network device via a media access control control element (MAC CE) signaling; or
based on a preconfigured trigger condition, sending the first message to the network device via a radio resource control (RRC) signaling, wherein the preconfigured trigger condition comprises the acquisition situation not meeting the preset condition.

13. The method according to any one of claims 1 to 3, wherein determining the new serving cell comprises:
determining a TN cell as the new serving cell via a connection reestablishment process, wherein the UE is in a connected state.

14. A method for determining a serving cell, performed by a network device and comprising:
determining a new serving cell for a user equipment (UE) based on a message sent by the UE, wherein a current serving cell of the UE is a non-terrestrial network (NTN) cell, and the message is sent by the UE when an acquisition situation of location information does not meet a preset condition.

15. The method according to claim 14, wherein the message is sent by the UE when the acquisition situation does not meet the preset condition, and a duration for which the acquisition situation does not meet the preset condition reaches a preset duration.

16. The method according to claim 14 or 15, wherein the preset condition comprises any one of:
the location information not being obtained by the UE; or
the location information being obtained by the UE, but at least one of a confidence and an uncertainty of the location information not meeting a preset threshold value requirement.

17. The method according to any one of claims 14 to 16, further comprising:
handing over a serving cell of the UE from the NTN cell to a TN cell.

18. The method according to any one of claims 14 to 17, wherein determining the new serving cell for the UE further comprises:
sending a measurement indication message to the UE;
receiving a measurement report reported by the UE after performing a cell measurement based on the measurement indication message; and
determining a TN cell as the new serving cell according to the measurement report.

19. An apparatus for determining a serving cell, wherein a current serving cell of the apparatus is a non-terrestrial network (NTN) cell, the apparatus comprising:
a processing module configured to determine a new serving cell when an acquisition situation of location information does not meet a preset condition.

20. An apparatus for determining a serving cell, comprising:
a processing module configured to determine a new serving cell for a user equipment (UE) based on a message sent by the UE, wherein a current serving cell of the UE is a non-terrestrial network (NTN) cell, and the message is sent by the UE when an acquisition situation of location information does not meet a preset condition.

21. A communication device, comprising:
a transceiver;
a memory; and
a processor,
wherein the processor is connected to the transceiver and the memory respectively, and configured to control a transmission and a reception of a wireless signal of the transceiver and cause the method according to any one of claims 1 to 13 to be implemented by executing computer-executable instructions on the memory.

22. A communication device, comprising:
a transceiver;
a memory; and
a processor,
wherein the processor is connected to the transceiver and the memory respectively, and configured to control a transmission and a reception of a wireless signal of the transceiver and cause the method according to any one of claims 14 to 18 to be implemented by executing computer-executable instructions on the memory.

23. A computer storage medium having stored therein computer-executable instructions that, when executed by a processor, cause the method according to any one of claims 1 to 13 to be implemented.

24. A computer storage medium having stored therein computer-executable instructions that, when executed by a processor, cause the method according to any one of claims 14 to 18 to be implemented.
